# EUROPEAN PATENT APPLICATION

(11) **EP 4 814 881 A1**
(43) Date of publication of application: **30.09.2026**
(21) Application number: 26167164.8
(22) Date of filing: 24.03.2026
(51) Int. Cl.: G06V 10/22, G06V 10/24, G06V 20/64, G06T 7/73

(54) **PROCESSING SYSTEM AND ALIGNMENT METHOD**

(30) Priority: 25.03.2025 JP 2025049549
(71) Applicant: Roland DG Corporation, Shizuoka 431-2103 (JP)
(72) Inventor: Ota, Kazuki, Hamamatsu-shi, Shizuoka, 431-2103 (JP); Shimojima, Kenta, Hamamatsu-shi, Shizuoka, 431-2103 (JP); Okubo, Yui, Hamamatsu-shi, Shizuoka, 431-2103 (JP)
(74) Representative: Grünecker Patent- und Rechtsanwälte PartG mbB

(57) **Abstract**

A processing system includes a processing device including a support surface that includes a processing area and supports a processing object, and a controller configured or programmed to extract an extracted image including the processing area from a captured image obtained by capturing an image of the support surface by an imaging device and including the processing area and the processing object, and correct a size of actual range data indicating an actual range of the processing area or the extracted image based on a calculation magnification of a surface distance with respect to a support surface distance. The controller is configured or programmed to create alignment data by aligning the actual range data and the extracted image after the correction, and create output data to be output to the processing device by aligning processing data to process the processing object and the alignment data.

## Description

### BACKGROUND OF THE INVENTION

### 1. Field of the Invention

The present invention relates to processing systems and alignment methods.

### 2. Description of the Related Art

Japanese Patent Application Publication No. 2024-94533, for example, discloses a processing device including a support table with a support surface to support a processing object, where a plurality of identification marks are applied with a predetermined reference positional relationship. In this processing device, a user uses an imaging device to capture an image of the support surface such that the plurality of identification marks and the processing object supported by the support surface are included in the image. Based on the captured image that is an image of the support surface captured by the imaging device, the position of the processing object with respect to the support surface is specified based on a positional relationship between the plurality of identification marks and the processing object.

A processing object may be a three-dimensional object. In the processing device described above, in capturing an image of the support surface with the three-dimensional processing object supported by the support surface, the presence of the processing object at a position closer to the imaging device than the support surface might cause an increase in size of the processing object appearing in the captured image. Even in such a case where the processing object appearing in the captured image is large, it is preferable that the processing object is subjected to desired processing.

### SUMMARY OF THE INVENTION

Example embodiments of the present invention provide processing systems and alignment methods each capable of creating output data for processing by a processing device to enable desired processing on a processing object.

A processing system according to an example embodiment of the present invention includes a processing device including a support surface that supports a processing object and includes a processing area where the processing object is processed, and a controller configured or programmed to include a storage, a height acquirer, an image acquirer, an extractor, a calculator, a corrector, a first creator, and a second creator. The storage is configured or programmed to store actual range data that includes an actual range indicating an actual size of the processing area. The height acquirer is configured or programmed to acquire a height of the processing object supported by the support surface. The image acquirer is configured or programmed to acquire a captured image obtained by capturing an image of the support surface by an imaging device such that the processing area and the processing object supported by the support surface are included in the image, the image being captured at an imaging position located above the support surface and set beforehand with respect to the support surface. The extractor is configured or programmed to extract an extracted image including the processing area from the captured image. The calculator is configured or programmed to calculate a calculation magnification of a surface distance with respect to a support surface distance based on the support surface distance and the surface distance, the support surface distance being a distance in top-bottom directions from the support surface to the imaging position, the surface distance being a distance in the top-bottom directions from a surface of the processing object to the imaging position. The corrector is configured or programmed to correct a size of the actual range or the extracted image such that a data magnification of the extracted image with respect to the actual range of the processing area is the calculation magnification. The first creator is configured or programmed to create alignment data by aligning the actual range and the extracted image corrected such that the data magnification is the calculation magnification. The second creator is configured or programmed to create output data to be output to the processing device by aligning processing data to process the processing object and the alignment data.

An alignment method according to an example embodiment of the present invention includes a height acquisition step, an image acquisition step, an extraction step, a calculation step, a correction step, a first creation step, and a second creation step. In the height acquisition step, in a processing device including a support surface that supports a processing object and includes a processing area where the processing object is processed, a height of the processing object supported by the support surface is acquired. In the image acquisition step, a captured image obtained by capturing an image of the support surface by an imaging device such that the processing area and the processing object supported by the support surface are included in the image is acquired, and the image is captured at an imaging position located above the support surface and set beforehand with respect to the support surface. In the extraction step, an extracted image including the processing area is extracted from the captured image. In the calculation step, a calculation magnification of a surface distance with respect to a support surface distance is calculated based on the support surface distance and the surface distance, the support surface distance is a distance in top-bottom directions from the support surface to the imaging position, and the surface distance is a distance in the top-bottom directions from a surface of the processing object to the imaging position. In the correction step, a size of the actual range or the extracted image is corrected such that a data magnification of the extracted image with respect to an actual range indicating an actual size of the processing area is the calculation magnification. In the first creation step, alignment data is created by aligning the actual range and the extracted image corrected such that the data magnification is the calculation magnification. In the second creation step, output data to be output to the processing device is created by aligning processing data to process the processing object and the alignment data.

Each of the processing system and the alignment method described above enables correction based on a ratio of the surface distance to the support surface distance by correcting the size of the actual range of the processing area or the extracted image such that the data magnification of the extracted image to the actual range of the processing area is the calculation magnification. Accordingly, the alignment data and the output data are created based on the relationship between the actual range of the processing area and the extracted image after the correction so that the processing object can be accurately aligned with respect to the processing area. Consequently, the processing device processes the processing object based on the thus-created output data to achieve desired processing on the processing object.

Example embodiments of the present invention provide processing systems and alignment methods each capable of creating output data for processing by a processing device to enable desired processing on a processing object.

### BRIEF DESCRIPTION OF THE DRAWINGS

FIG. 1 is a conceptual view of a processing system according to an example embodiment of the present invention.
FIG. 2 is a perspective view illustrating a printer.
FIG. 3 is a front view of the printer.
FIG. 4 is a right cross-sectional view of the printer.
FIG. 5 is a block diagram of a processing system according to an example embodiment of the present invention.
FIG. 6 is a plan view illustrating a support surface of a support table.
FIG. 7 is a front view illustrating the printer in a state where a laser pointer is at an irradiation position.
FIG. 8 is a perspective view illustrating an imaging jig.
FIG. 9 is a perspective view illustrating a state where the imaging jig is attached to a fixed wall.
FIG. 10 is a right side view illustrating the imaging jig.
FIG. 11 is a plan view illustrating the imaging jig and showing a positional relationship between the imaging jig and the support surface.
FIG. 12 is a flowchart depicting a procedure from when a print object is supported by the support surface of the support table to when printing on the print object starts.
FIG. 13 is a view illustrating an actual range image.
FIG. 14 schematically illustrates a positional relationship among an imaging position, the support surface, and the print object.
FIG. 15 illustrates a captured image.
FIG. 16 illustrates an extracted image.
FIG. 17 illustrates a corrected extracted image.
FIG. 18 illustrates alignment data.
FIG. 19 illustrates output data.
FIG. 20 illustrates a corrected actual range image in another example embodiment of the present invention.
FIG. 21 illustrates alignment data in another example embodiment of the present invention.
FIG. 22 illustrates overlay data in another example embodiment of the present invention.

### DETAILED DESCRIPTION OF THE EXAMPLE EMBODIMENTS

Example embodiments of the present invention will be described hereinafter with reference to the drawings. The example embodiments described herein are, of course, not intended to particularly limit the present invention. Elements and features having the same functions are denoted by the same reference characters, and description for the same elements and features will not be repeated or will be simplified as appropriate.

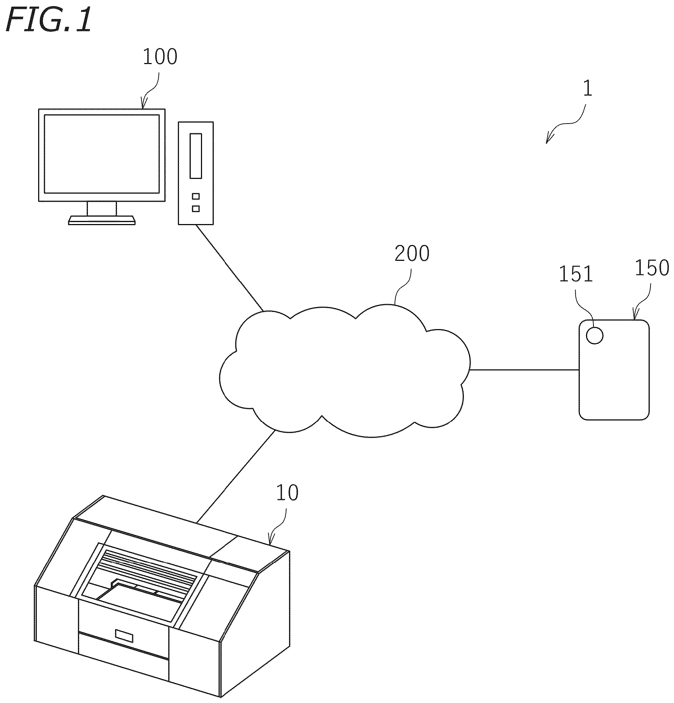

FIG. 1 is a conceptual view of a processing system 1 according to the present example embodiment. As illustrated in FIG. 1, the processing system 1 includes a printer 10, an operation terminal 100, and an imaging device 150. The operation terminal 100 is communicably connected to the printer 10 and the imaging device 150. The printer 10 and the imaging device 150 are not necessarily communicably connected to each other. In this example embodiment, the printer 10, the operation terminal 100, and the imaging device 150 are connected to the Internet 200 and are communicable with one another via the Internet 200. The printer 10, the operation terminal 100, and the imaging device 150 will be sequentially described below.

First, the printer 10 will be described. In this example embodiment, the processing system 1 includes a single printer 10. However, the processing system 1 may include a plurality of printers 10.

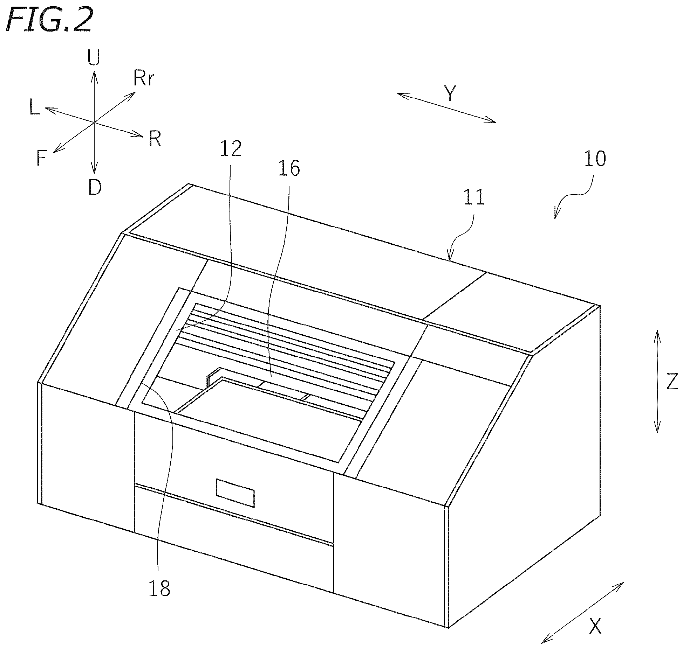

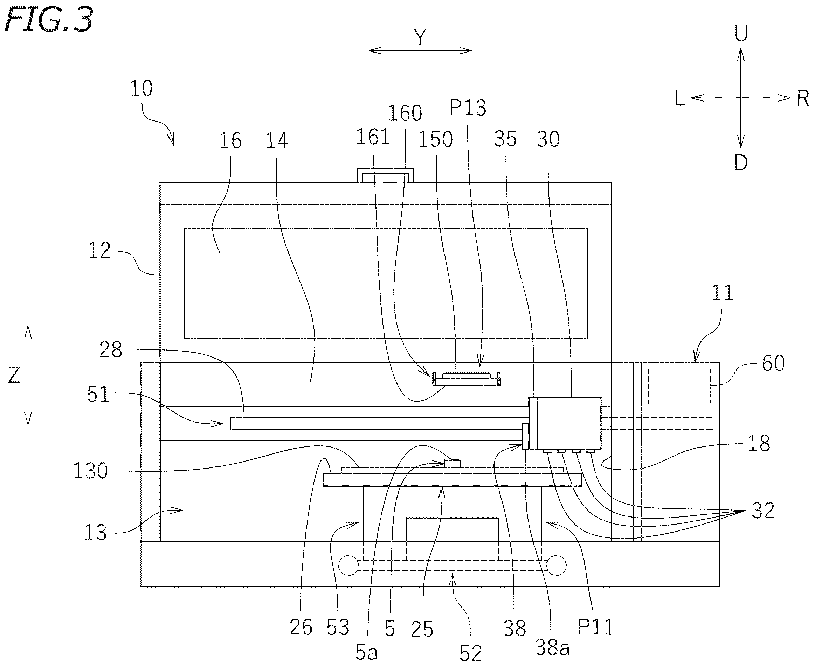

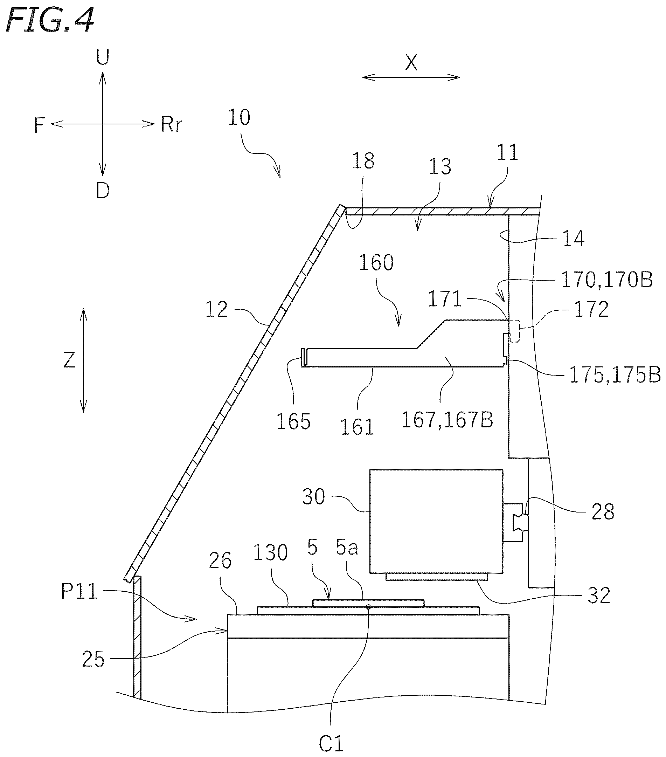

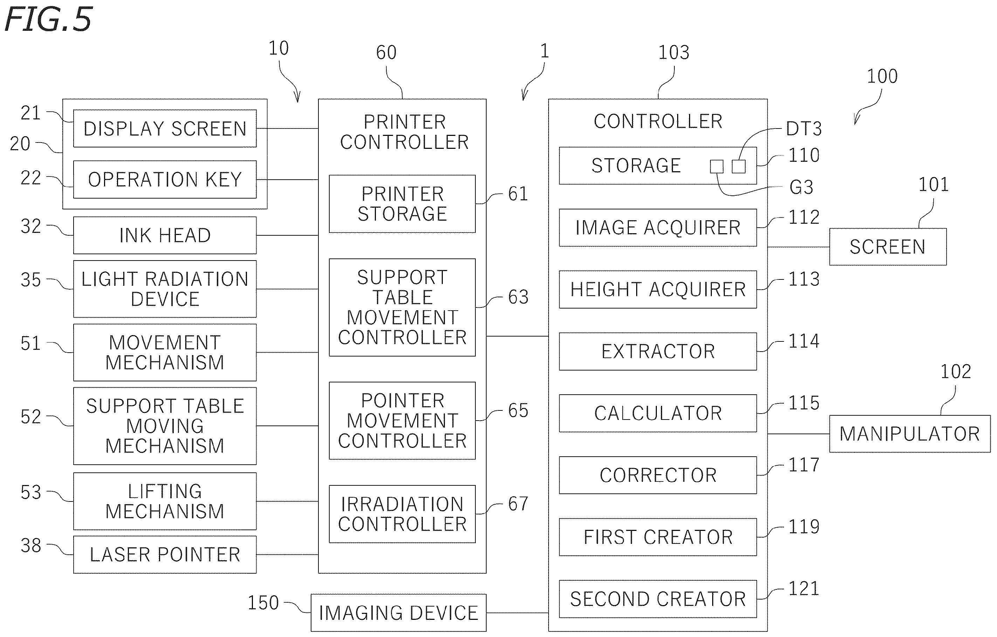

FIG. 2 is a perspective view illustrating the printer 10. FIG. 3 is a front view of the printer 10. FIG. 4 is a right cross-sectional view of the printer 10. FIG. 5 is a block diagram of the processing system 1. In the following description, when a user sees the printer 10 from the front, a direction in which the user moves away from the printer 10 will be referred to as forward, and a direction in which the user approaches the printer 10 will be referred to as rearward. The left, right, up, and down of the printer 10 respectively refer to left, right, up, and down when the user sees the printer 10 from the front. Characters F, Rr, L, R, U, and D in the drawings herein respectively represent the front, rear, left, right, up, and down of the printer 10. Character Y represents main scanning directions in the drawings. In this example embodiment, the main scanning directions Y are left-right directions. Character X represents sub-scanning directions. The sub-scanning directions X intersect (herein, are orthogonal to) the main scanning directions Y in a plan view. In this example embodiment, the sub-scanning directions X are, for example, front-rear directions. Character Z represents height directions, in other words, top-bottom directions. The height directions Z are orthogonal to the main scanning directions Y and the sub-scanning directions X. It should be noted that the directions described above are defined simply for convenience of description, and are not intended to limit the state of installation of the printer 10 and do not limit the present invention.

The printer 10 is an ink jet printer, for example. The printing method of the printer 10 is not particularly limited. The printer 10 may be, for example, a dot impact printer, or may be a laser printer or a thermal printer. The printer 10 is a so-called flat-bed printer, and is configured such that movement of a support table 25 (see FIG. 3) described later in the sub-scanning directions X causes a print object 5 (see FIG. 3) to move in the sub-scanning directions X. The printer 10 may be a so-called gantry-type printer in which the print object 5 supported by the support table 25 itself is not moved and ink heads 32 (see FIG. 3) described later move in the main scanning directions Y and the sub-scanning directions X.

In this example embodiment, the printer 10 is an example of a processing device. The printer 10 is used for processing a print object 5 as an example of a processing object. The "processing" herein refers to applying some treatment to the surface of the processing object (the print object 5 in this example embodiment) to cause a change. In this example embodiment, the printer 10 changes the surface of the print object 5 by performing printing on the surface of the print object 5. The printer 10 is a device that processes the print object 5 by performing printing on the print object 5.

As illustrated in FIG. 2, the printer 10 includes a case 11 and a cover 12. As illustrated in FIG. 3, the case 11 includes an internal space 13 therein. Printing is performed in this internal space 13. The case 11 has an opening 18. In this example embodiment, the opening 18 is located in a front portion of the case 11. The opening 18 communicates with the internal space 13.

The cover 12 opens and closes the opening 18. The cover 12 is supported by the case 11 to freely open and close the opening 18. The cover 12 is pivotable with respect to, for example, the case 11. As illustrated in FIG. 2, the cover 12 includes a window 16. The window 16 is formed of a transparent or semitransparent member, for example, an acrylic plate. A user can visually recognize the internal space 13 of the case 11 through the window 16.

In this example embodiment, as illustrated in FIG. 5, the printer 10 includes an operation panel 20. Although not shown, the operation panel 20 is located on, for example, the case 11. The operation panel 20 includes a display screen 21 on which information of settings of the printer 10 and other information are displayed, and an operation key 22. The user can display information on various settings on the display screen 21 and determine the content of the settings by manipulating the operation key 22, for example. The operation key 22 may be physical buttons or may be a touch panel on the display screen 21, for example.

Next, the internal configuration of the printer 10 will be described. As illustrated in FIG. 3, the printer 10 includes the support table 25. The support table 25 supports the print object 5. The support table 25 herein includes a support surface 26 that supports the print object 5. The support surface 26 defines the upper surface of the support table 25. The print object 5 is placed on the support surface 26. In this example embodiment, printing is performed on the support surface 26. The support surface 26 is a flat surface that extends in the main scanning directions Y and the sub-scanning directions X.

As illustrated in FIG. 3, the printer 10 includes a guide rail 28, a carriage 30, ink heads 32, and a light radiation device 35. The guide rail 28 is located in the internal space 13 of the case 11 and fixed to the case 11. The guide rail 28 is located above the support table 25. The guide rail 28 extends in the main scanning directions Y. The carriage 30 is slidably located on the guide rail 28. The carriage 30 is movable in the main scanning directions Y along the guide rail 28.

The ink heads 32 are located above the support table 25. The ink heads 32 herein are located above the support table 25 and the print object 5 supported by the support table 25. The ink heads 32 discharge ink. The ink heads 32 herein discharge ink downward toward the print object 5 supported by the support table 25. The ink heads 32 are mounted on the carriage 30. Specifically, the ink heads 32 are supported by the carriage 30 in a state where the nozzle surfaces (not shown) are exposed downward. The number of ink heads 32 is not particularly limited. In this example embodiment, the number of ink heads 32 is four, for example. The four ink heads 32 are arranged in the main scanning directions Y. A plurality of nozzles that discharge ink are formed on the nozzle surfaces.

The ink heads 32 discharge different colors of ink. The specific colors of the ink discharged from the ink heads 32 are not particularly limited. The ink discharged from each of the ink heads 32 is, for example, any one of process color inks and spot color inks. Examples of the process color inks include cyan ink, magenta ink, yellow ink, and black ink. Examples of the spot color inks include inks of colors other than process color inks, such as white ink and clear ink. In this example embodiment, the plurality of ink heads 32 discharge different colors of ink, but some of the ink heads 32 may discharge the same color of ink. The material of the ink discharged from the ink heads 32 is not particularly limited, and various materials conventionally used as ink materials for ink jet printers may be used. In this example embodiment, the ink discharged from the ink heads 32 is a photocurable ink that is cured when exposed to light. The light irradiated onto the ink is, for example, ultraviolet (UV) rays. The ink herein is a UV curable ink that promotes curing upon exposed to UV radiation.

The light radiation device 35 emits light. In this example embodiment, the light radiation device 35 is a device that emits light onto ink discharged from the ink heads 32. Specifically, the light radiation device 35 is configured to emit light onto ink discharged onto the print object 5. In this example embodiment, the ink discharged from the ink heads 32 is a UV curable ink that promotes curing when exposed to UV light. Therefore, the light radiation device 35 may be a UV radiation device that emits UV rays onto the ink discharged from the ink heads 32.

As illustrated in FIG. 3, the light radiation device 35 is located on the carriage 30 and is movable in the main scanning directions Y together with the carriage 30 and the ink heads 32. In this example embodiment, the number of light radiation devices 35 is one, for example. The light radiation device 35 is located on the left of the carriage 30. Alternatively, the light radiation device 35 may be located on the right of the carriage 30, or may be located on each of the left and right of the carriage 30. The light radiation device 35 and the ink heads 32 are arranged side by side in the main scanning directions Y.

In this example embodiment, as illustrated in FIG. 3, the printer 10 includes a movement mechanism 51 that moves the carriage 30, the ink heads 32, the light radiation device 35, and a laser pointer 38 described later in the main scanning directions Y relative to the support table 25, and a support table moving mechanism 52 that moves the print object 5 supported by the support table 25 in the sub-scanning directions X relative to the carriage 30, the ink heads 32, the light radiation device 35, and the laser pointer 38. The printer 10 also includes a lifting mechanism 53 that lifts and lowers the support table 25.

The movement mechanism 51 moves the carriage 30, the ink heads 32, the light radiation device 35, and the laser pointer 38 in the main scanning directions Y relative to the support surface 26. The movement mechanism 51 herein moves the carriage 30, the ink heads 32, the light radiation device 35, and the laser pointer 38 in the main scanning directions Y. The configuration of the movement mechanism 51 is not particularly limited. Although not shown, the movement mechanism 51 includes, for example, left and right pulleys, a belt, and a scan motor. The left pulley is located at the left end of the guide rail 28, and the right pulley is located at the right end of the guide rail 28. The belt is, for example, an endless belt and is looped over the left and right pulleys. The carriage 30 is fixed to the belt. The scan motor is connected to one of the left and right pulleys. In this example embodiment, the scan motor is driven to cause the pulley to rotate to allow the belt to run between the left and right pulleys. Accordingly, the ink heads 32, the light radiation device 35, and the laser pointer 38 move in the main scanning directions Y along the guide rail 28 together with the carriage 30.

The support table moving mechanism 52 moves the support table 25 in the sub-scanning directions X to move the print object 5 supported by the support table 25 in the sub-scanning directions X. The configuration of the support table moving mechanism 52 is not particularly limited. Although not shown, the support table moving mechanism 52 herein includes a support table carriage that supports the support table 25, and a pair of left and right slide rails that slidably supports the support table carriage and extends in the sub-scanning directions X. Although not shown, the support table moving mechanism 52 also includes a pair of front and rear slide pulleys located forward and rearward of the slide rails, and a slide belt looped over the pair of front and rear slide pulleys. The support table carriage is fixed to the slide belt. A feed motor is connected to one of the pair of front and rear slide pulleys. The field motor herein is driven to cause the slide belt to run so that the support table 25 to move in the sub-scanning directions X together with the support table carriage. Accordingly, the print object 5 supported by the support table 25 also moves in the sub-scanning directions X.

The lifting mechanism 53 is a mechanism that lifts and lowers the support table 25. In this example embodiment, the support table 25 is configured to be movable upward and downward. The configuration of the lifting mechanism 53 is not particularly limited. For example, although not shown, the lifting mechanism 53 includes a lifting motor. The lifting motor is connected to, for example, the support table 25. In this example embodiment, the lifting motor is driven to move the support table 25 upward and downward.

As illustrated in FIG. 3, the printer 10 includes a printer controller 60 configured or programmed to perform control concerning printing and others. The configuration of the printer controller 60 is not particularly limited. The printer controller 60 is, for example, a microcomputer. The hardware configuration of the microcomputer is not particularly limited. The printer controller 60 includes, for example, an interface (I/F) that receives print data and others from an external device (herein, the operation terminal 100) such as a host computer, a central processing unit (CPU) that executes an instruction of a control program, a read only memory (ROM) that stores a program to be executed by the CPU, a random access memory (RAM) that is used as a working area in which the program is developed, and a memory that stores the program and various types of data. The printer controller 60 is located inside the case 11. Alternatively, the printer controller 60 may be implemented by a computer located outside the case 11. In this case, for example, the printer controller 60 may be integrated with a controller 103 described later of the operation terminal 100. In this case, the printer controller 60 is preferably communicably connected to a control board (not shown) of the printer 10 via wires or wirelessly.

In this example embodiment, as illustrated in FIG. 5, the printer controller 60 is communicably connected to the operation panel 20 (specifically, the display screen 21 and the operation key 22), the ink heads 32, the light radiation device 35, the movement mechanism 51, the support table moving mechanism 52, and the lifting mechanism 53. The printer controller 60 is configured or programmed to control the operation panel 20, the ink heads 32, the light radiation device 35, the movement mechanism 51, the support table moving mechanism 52, and the lifting mechanism 53.

The foregoing description is directed to the configuration of the printer 10 according to this example embodiment. Next, the operation terminal 100 illustrated in FIG. 1 will be described. The operation terminal 100 is a terminal to be manipulated by a user. The user can control the printer 10 by manipulating the operation terminal 100. In addition, the operation terminal 100 is a terminal for creating print data that includes a print image to be printed on the print object 5, and for setting a position on the print object 5 on which the print image of the print data is to be printed, as well as a size and an orientation of the print image relative to the print object 5.

In this example embodiment, as illustrated in FIG. 1, the operation terminal 100 is communicably connected to the printer 10 via the Internet 200. The operation terminal 100 is implemented by a computer located outside the case 11 of the printer 10. The computer that implements the operation terminal 100 may be a computer dedicated to the printer 10 or a general-purpose computer. The operation terminal 100 may be a desktop computer or a laptop computer. The operation terminal 100 may be a tablet terminal or a smartphone. In this example embodiment, the number of operation terminals 100 included in the processing system 1 is one, but may be two or more, for example.

As illustrated in FIG. 5, the operation terminal 100 includes a screen 101, a manipulator 102, and the controller 103. The screen 101 is, for example, a screen of a desktop or laptop computer, or a screen of a portable terminal such as a tablet terminal or a smartphone. The manipulator 102 is manipulated by a user for input. The manipulator 102 may be, for example, a keyboard, a mouse, and/or a touch panel. The controller includes, for example, a CPU, a ROM, and a RAM. The controller 103 is communicably connected to the screen 101 and the manipulator 102. The controller 103 is also connected to the Internet 200 and is communicably connected to the printer 10 (specifically, the printer controller 60) via the Internet 200.

The print object 5 (see FIG. 3) as a target of printing by the printer 10 according to this example embodiment is a three-dimensional object. The print object 5 is an example of a processing object. The print object 5 is, for example, a material for a smartphone case. The print object 5 is formed of a resin. It should be noted that the type of the material for the print object 5 is not particularly limited. For example, the print object 5 may be a flat object such as paper. The print object 5 may be a relatively thick object such as a sheet of a resin material exemplified by PVC or polyester, a metal plate, a glass plate, or a wood plate. In this example embodiment, as illustrated in FIG. 4, the print object 5 includes a printing surface 5a. The printing surface 5a refers to a surface of the print object 5 on which printing (i.e., processing) is performed by the printer 10. In this example embodiment, the printing surface 5a is the upper surface of the print object 5. The printing surface 5a is located above the support surface 26 in a state where the print object 5 is supported by the support surface 26.

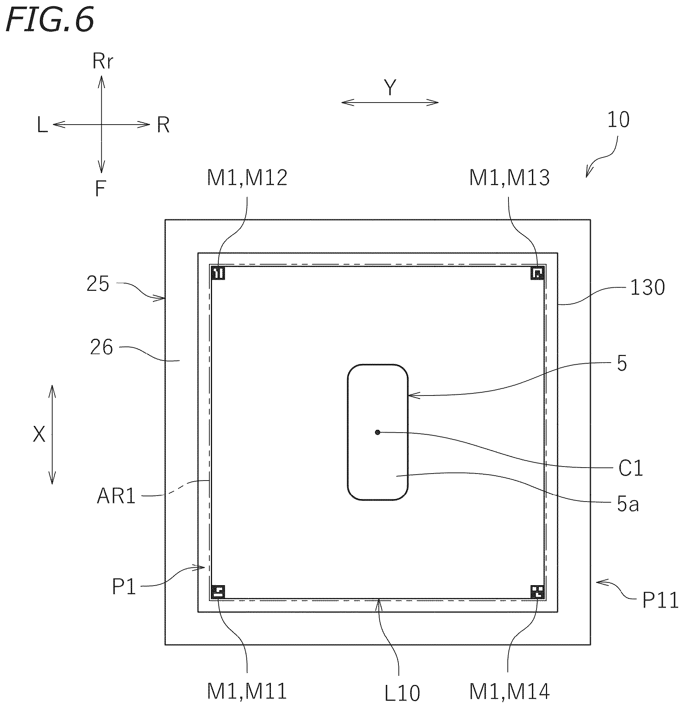

As illustrated in FIG. 3, in printing on the print object 5, the print object 5 is placed on the support surface 26 of the support table 25. At this time, the position and orientation of the print object 5 with respect to the support surface 26 are set to a predetermined reference position and a predetermined reference orientation. When the print object 5 is placed to deviate from the reference position and the reference orientation, misalignment might occur in printing on the print object 5. In view of this, in this example embodiment, specific marks M1 (see FIG. 6) that indicate the position and orientation for placing the print object 5 are applied to the support surface 26. The user manually places the print object 5 on the support surface 26 with reference to, for example, the specific marks M1 and others attached to the support surface 26.

FIG. 6 is a plan view illustrating the support surface 26 of the support table 25. In this example embodiment, as illustrated in FIG. 6, a print area AR1 is set beforehand on the support surface 26 of the support table 25. The print area AR1 is an example of a processing area. The print area AR1 is an area where the print object 5 is processed. The print area AR1 herein refers to a maximum range in which printing can be performed on the print object 5 on the support surface 26, and is a maximum range in which the print object 5 is placed on the support surface 26. The print area AR1 is rectangular or substantially rectangular, for example, but the shape of the print area AR1 is not particularly limited.

In this example embodiment, a plurality of specific marks M1 are applied to the support surface 26. In this example embodiment, the specific marks M1 are used for specifying the position of the print area AR1 with respect to the support surface 26. The number of the specific marks M1 is not particularly limited, and is, for example, three or more, for example. The number of the specific marks M1 is four in this example embodiment. The four specific marks M1 are applied at positions corresponding to the print area AR1, and in this example embodiment, are applied at the positions of the support surface 26 corresponding to the vertices of the rectangular print area AR1. The four specific marks M1 are located within the print area AR1. It should be noted that the plurality of specific marks M1 may be applied to an area other than the vertices of the print area AR1, for example, an area outside the print area AR1.

The four specific marks M1 will be hereinafter referred to as a first specific mark M11, a second specific mark M12, a third specific mark M13, and a fourth specific mark M14. The specific marks M1 include the first specific mark M11, the second specific mark M12, the third specific mark M13, and the fourth specific mark M14. The first specific mark M11, the second specific mark M12, the third specific mark M13, and the fourth specific mark M14 are arranged to include the left front, left rear, right rear, and right front vertices of the print area AR1, respectively. In this example embodiment, the first specific mark M11 is located such that the left front vertex of the first specific mark M11 coincides with the left front vertex of the print area AR1. The second specific mark M12 is located such that the left rear vertex of the second specific mark M12 coincides with the left rear vertex of the print area AR1. The third specific mark M13 is located such that the right rear vertex of the third specific mark M13 coincides with the right rear vertex of the print area AR1. The fourth specific mark M14 is located such that the right front vertex of the fourth specific mark M14 coincides with the right front vertex of the print area AR1. Each of the first specific mark M11 through the fourth specific mark M14 includes information concerning a position relative to the print area AR1, and it is possible to determine at which position each specific mark M1 is located by imaging by the imaging device 150 (see FIG. 1). For example, the first specific mark M11 includes information concerning the position of the left front vertex of the print area AR1, and by being imaged by the imaging device 150, the position of the left front vertex of the print area AR1 can be determined from the first specific mark M11.

In this example embodiment, the positional relationship among the plurality of specific marks M1 applied to the support surface 26 will be referred to as a reference positional relationship P1. The reference positional relationship P1 refers to a positional relationship among the first specific mark M11 through the fourth specific mark M14. The reference positional relationship P1 herein refers to a positional relationship among the plurality of specific marks M1 in a state where the first specific mark M11, the second specific mark M12, the third specific mark M13, and the fourth specific mark M14 are arranged at the left front, left rear, right rear, and right front of the support surface 26, respectively. For example, the reference positional relationship P1 of the first specific mark M11 is a position forward of the second specific mark M12, forward and leftward of the third specific mark M13, and leftward of the fourth specific mark M14.

The types and shapes of the specific marks M1 are not particularly limited. In this example embodiment, the specific marks M1 are so-called AR markers or ArUco markers. The shapes of the specific marks M1 are, for example, rectangular or substantially rectangular.

In this example embodiment, a frame line L10 is applied to the support surface 26 of the support table 25 in addition to the specific marks M1. The frame line L10 is a line that connects the plurality of specific marks M1. The frame line L10 is a line along the outline of the print area AR1, and the shape of the frame line L10 is rectangular or substantially rectangular To illustrate both the frame line L10 and the print area AR1, FIG. 6 and other drawings show a line indicating the outline of the print area AR1 outside the frame line L10 for convenience. However, in reality, the frame line L10 coincides with the line along the outline of the print area AR1. The frame line L10 is a line that surrounds the print area AR1 in a plan view. In this example embodiment, the frame line L10 connects the vertices of the first specific mark M11 through the fourth specific mark M14 on the opposite side to a center C1 of the print area AR1. Specifically, the frame line L10 connects the left front vertex of the first specific mark M11, the left rear vertex of the second specific mark M12, the right rear vertex of the third specific mark M13, and the right front vertex of the fourth specific mark M14.

In this example embodiment, the plurality of specific marks M1 are applied to the support surface 26. The expression "the specific marks M1 are applied to the support surface 26" herein means that the specific marks M1 are located on the support surface 26, and the positional relationship among the plurality of specific marks M1 (the first specific mark M11 through the fourth specific mark M14 in this example embodiment) can be identified. The term "apply" may be achieved by, for example, printing the specific marks M1 or attaching the specific marks M1 with stickers. The plurality of specific marks M1 may be directly applied to the support surface 26, or may be applied to another member to be indirectly applied to the support surface 26 through this member. Further, the frame line L10 may be directly applied to the support surface 26 or may be applied to another member to be indirectly applied to the support surface 26 through this member. The frame line L10 may be omitted.

In this example embodiment, as illustrated in FIG. 3, the support table 25 includes a mounting jig 130. The mounting jig 130 is, for example, mounted on the support surface 26 of the support table 25 to be supported by the support surface 26 in printing on the print object 5. As illustrated in FIG. 6, the mounting jig 130 is placed to cover the print area AR1 of the support surface 26 from above. The print object 5 is placed on the printing jig 130. The mounting jig 130 supports the print object 5. In printing on the print object 5 in this example embodiment, the print object 5, the mounting jig 130, and the support surface 26 are stacked in this order from the top. The number of print objects 5 supported by the mounting jig 130, that is, the number of print objects 5 supported by the support surface 26, is one in FIG. 6, but is not particularly limited. The mounting jig 130 is made of rubber, for example, but a material for the mounting jig 130 is not particularly limited.

In this example embodiment, as illustrated in FIG. 6, the plurality of specific marks M1 (the first specific mark M11 through the fourth specific mark M14 in this example embodiment) and the frame line L10 are applied to the mounting jig 130. Specifically, the plurality of specific marks M1 are applied at positions on the mounting jig 130 corresponding to the positions of the vertices of the print area AR1 in a state where the mounting jig 130 is placed on the support surface 26. The frame line L10 is applied to the mounting jig 130 to connect the plurality of specific marks M1. In this example embodiment, the plurality of specific marks M1 and the frame line L10 are applied to the mounting jig 130 by printing. The positional relationship among the plurality of specific marks M1 applied to the mounting jig 130 is the reference positional relationship P1, and the mounting jig 130 is placed on the support surface 26 such that the frame line L10 surrounds the print area AR1 in a plan view.

In this example embodiment, as illustrated in FIGS. 3 and 4, in the printer 10, the reference position P11 is set beforehand with respect to the support table 25. The reference position P11 is a position of the support table 25 when the user performs the work of causing the support surface 26 to support the print object 5. The reference position P11 is a position of the support table 25 when the imaging device 150 (see FIG. 3) captures an image of the support surface 26. The reference position P11 is the position of the support table 25 in the sub-scanning directions X with respect to the case 11 (i.e., the internal space 13), and is also the position of the support table 25 in the height directions Z with respect to the case 11 (i.e., the internal space 13). In this example embodiment, the reference position P11 refers to a position where a user in front of the printer 10 can visually recognize the plurality of specific marks M1 applied to the support surface 26. The reference position P11 refers to the position of the support table 25 in the sub-scanning directions X at which the plurality of specific marks M1 are arranged forward of a fixed wall 14 described later (see FIG. 4). As illustrated in FIG. 4, the position of the reference position P11 in the sub-scanning directions X may be the foremost position of the support table 25 that can be moved forward by the support table moving mechanism 52. The position of the reference position P11 in the height directions Z is the lowest position of the support table 25 that can be moved downward by the lifting mechanism 53.

In this example embodiment, as illustrated in FIG. 6, the print object 5 is preferably placed on a center portion of the print area AR1 of the support surface 26. That is, the print object 5 may be placed on the support surface 26 to overlap the center C1 of the print area AR1. In this example embodiment, the printer 10 includes the laser pointer 38 (see FIG. 3) to indicate the center portion of the print area AR1. The laser pointer 38 is configured to emit laser light to the center portion of the print area AR1 (specifically, the center C1 of the print area AR1) of the support surface 26 in a state where the support table 25 is located at the reference position P11 (see FIG. 6). In this example embodiment, as illustrated in FIG. 3, the laser pointer 38 is located on the carriage 30 and is configured to be movable in the main scanning directions Y together with the carriage 30. Specifically, the laser pointer 38 is located on the left of the light radiation device 35. As long as the center portion of the print area AR1 can be irradiated with laser light, the laser pointer 38 does not necessarily have to be mounted on the carriage 30. The laser pointer 38 may be omitted.

The laser pointer 38 includes an emitter 38a. The emitter 38a is located at a lower end portion of the laser pointer 38. The emitter 38a is oriented downward. The emitter 38a is configured to emit laser light downward. As illustrated in FIG. 5, the laser pointer 38 is communicably connected to the printer controller 60. The printer controller 60 is configured or programmed to control the timing of emission of laser light in the laser pointer 38.

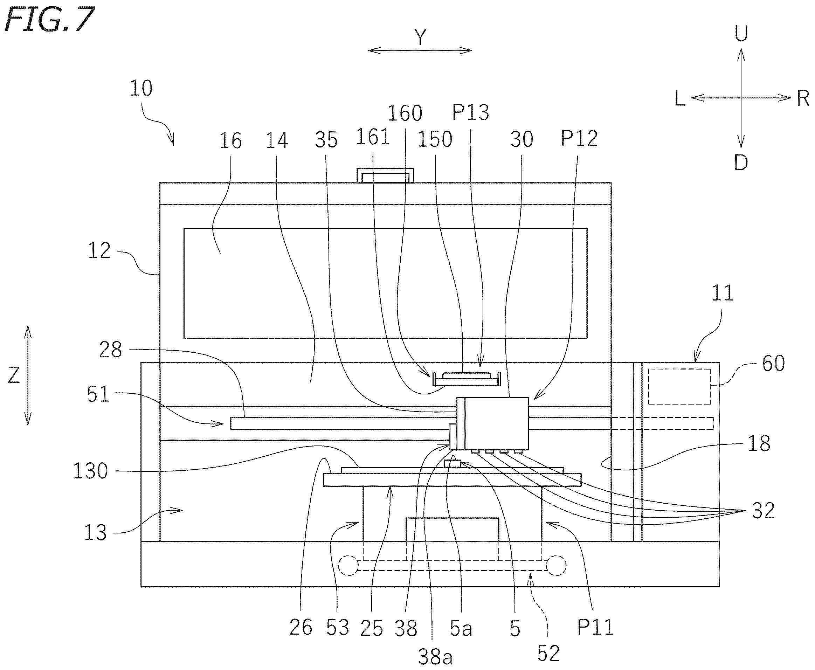

FIG. 7 is a front view illustrating the printer 10 in a state where the laser pointer 38 is at an irradiation position P12. The laser pointer 38 emits laser light. In this example embodiment, a position of the laser pointer 38 at which the laser pointer 38 irradiates the center portion of the print area AR1 of the support surface 26 in a state where the support table 25 is located at the reference position P11 will be referred to as the irradiation position P12 (see FIG. 7). As illustrated in FIG. 7, the irradiation position P12 is a position of the laser pointer 38 in the main scanning directions Y relative to the case 11 (i.e., the internal space 13). In this example embodiment, the irradiation position P12 is the position of the laser pointer 38 at which the emitter 38a of the laser pointer 38 overlaps the center C1 of the print area AR1 in a plan view in the state where the support table 25 is located at the reference position P11, for example. In this example embodiment, in moving the carriage 30 in the main scanning directions Y, the movement mechanism 51 can move the laser pointer 38 in the main scanning directions Y together with the carriage 30. Accordingly, the laser pointer 38 can be moved to the irradiation position P12 by the movement mechanism 51. In a case where the laser pointer 38 is not mounted on the carriage 30, the position of the laser pointer 38 when the center portion of the print area AR1 is irradiated with laser light is the irradiation position P12.

In this example embodiment, before printing, an image of the support surface 26 supporting the print object 5 is captured by the imaging device 150 illustrated in FIG. 1. The imaging device 150 is used by, for example, a user. The imaging device 150 is a device that captures an image of the support surface 26 of the support table 25. As illustrated in FIG. 1, the imaging device 150 includes a lens 151. The imaging device 150 captures an image of the support surface 26 through the lens 151. The user captures an image of the support surface 26 by using the imaging device 150 such that the plurality of identification marks M1 and the frame line L10 applied to the support surface 26 and the print object 5 supported by the support surface 26 are included in the image. The thus-obtained image of the support surface 26 captured by the imaging device 150 will be referred to as a captured image.

In this example embodiment, as illustrated in FIG. 1, the number of imaging devices 150 included in the processing system 1 is one, but may be two or more, for example. The type of the imaging device 150 is not particularly limited. The imaging device 150 may be a device that enables determination of a positional relationship of the print object 5 with respect to the print area AR1 by imaging. The imaging device 150 is, for example, a camera. In this example embodiment, the imaging device 150 is a camera mounted on a portable terminal such as a smartphone or a tablet terminal. The imaging device 150 is, for example, a component separate from the operation terminal 100, and is communicable with the operation terminal 100 via the Internet 200, for example. The imaging device 150 may be mounted on the operation terminal 100, that is, may be integrated with the operation terminal 100. In this example embodiment, the imaging device 150 is not fixed to the printer 10 (e.g., the case 11 or the carriage 30). In this example embodiment, the imaging device 150 is communicable with the controller 60 of the printer 10 via the Internet 200.

In capturing an image of the support surface 26 by the imaging device 150, the position of the imaging device 150 relative to the support surface 26 is preferably constant. In this example embodiment, the areas of the support surface 26 and the print area AR1 are larger than those in the related art. In this case, to capture an image of the support surface 26 such that the image includes the print area AR1, the distance from the support surface 26 to the imaging device 150 becomes long. As the distance increases, the position of the imaging device 150 relative to the support surface 26 is more likely to be shifted. In view of this, as described in this example embodiment, the printer 10 includes an imaging jig 160 that is used in capturing an image of the support surface 26 such that even in the case where the areas of the support surface 26 and the print area AR1 are increased, the distance from the support surface 26 to the imaging device 150 is kept constant, as illustrated in FIG. 3. The imaging jig 160 supports the imaging device 150 in capturing an image of the support surface 26 by the imaging device 150. In this example embodiment, the imaging device 150 is mounted on the imaging jig 160. By supporting the imaging device 150 on the imaging jig 160, the distance from the support surface 26 to the imaging device 150 is kept constant in capturing an image of the support surface 26.

The imaging jig 160 is located in the internal space 13 of the case 11. In this example embodiment, as illustrated in FIG. 3, the printer 10 includes the fixed wall 14. The fixed wall 14 is fixed to the case 11 and is located in the internal space 13. The fixed wall 14 is located in an upper portion of the internal space 13 of the case 11. The fixed wall 14 is located above the guide rail 28. The fixed wall 14 is a plate member extending in the main scanning directions Y and the height directions Z. In this example embodiment, as illustrated in FIG. 4, the imaging jig 160 is located on the front surface of the fixed wall 14 and fixed to the fixed wall 14. The imaging jig 160 is located forward of the fixed wall 14. The imaging jig 160 is detachably attached to the fixed wall 14.

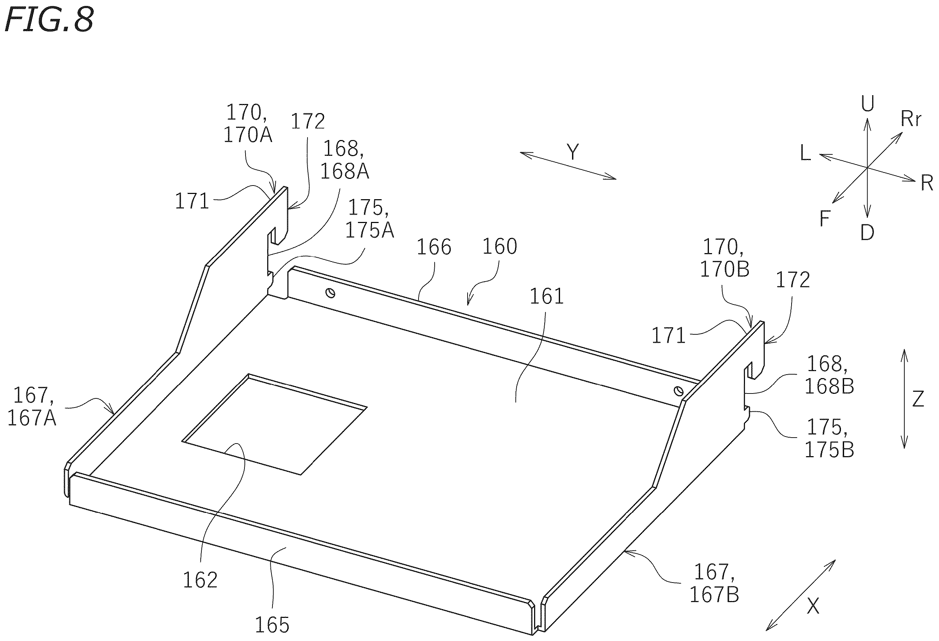

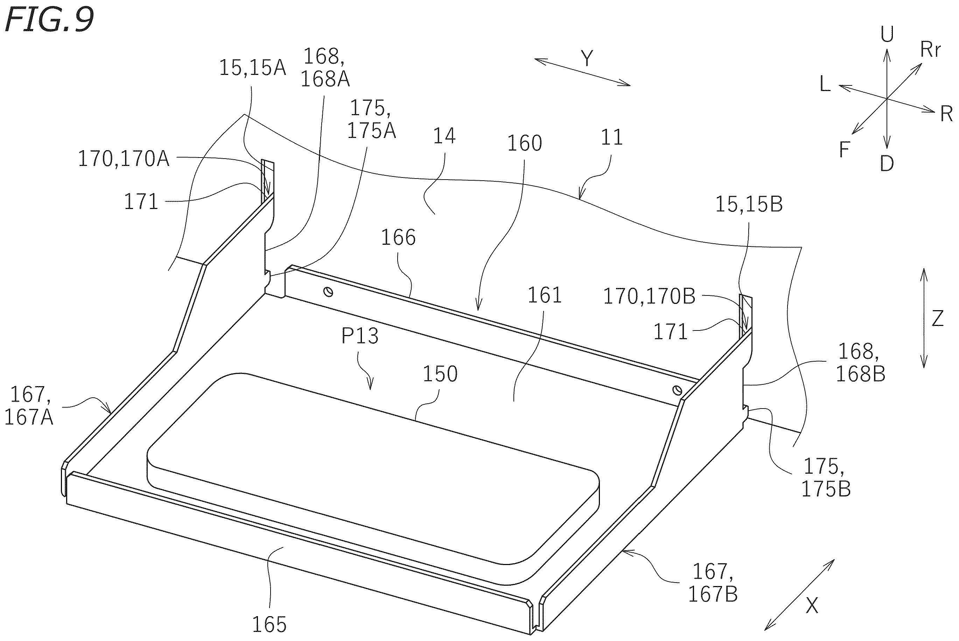

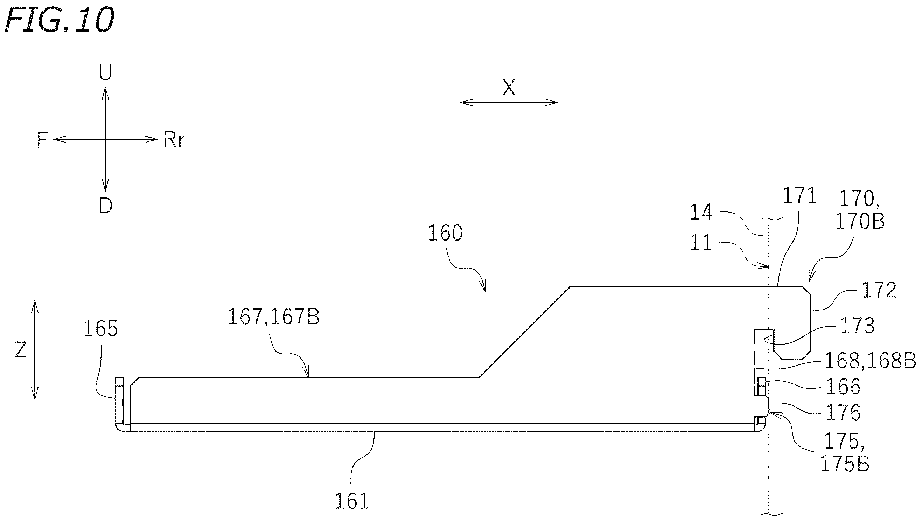

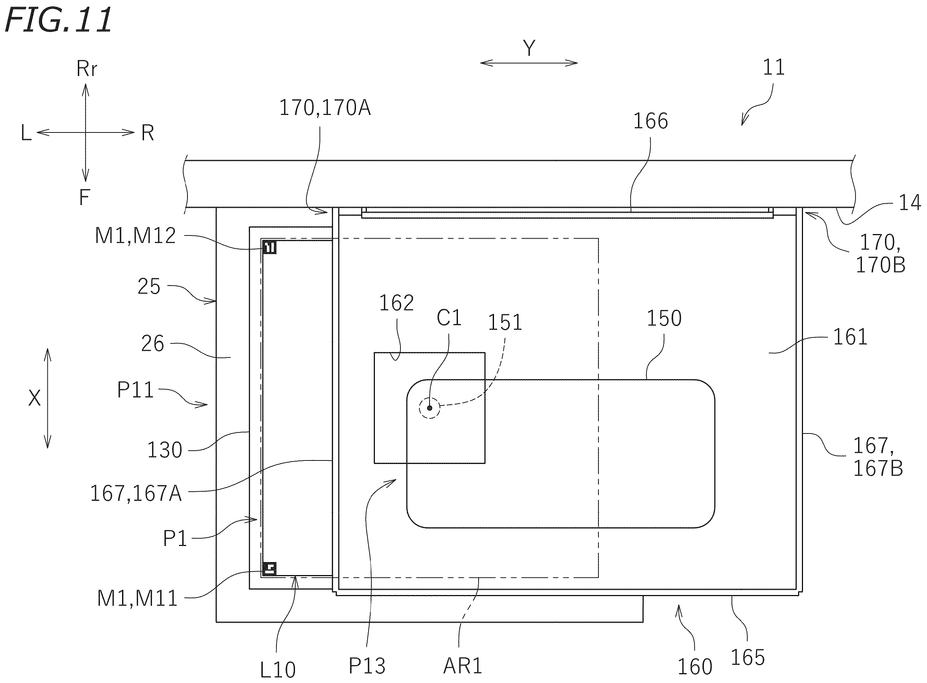

The configuration of the imaging jig 160 is not particularly limited. FIG. 8 is a perspective view illustrating the imaging jig 160. FIG. 9 is a perspective view illustrating a state where the imaging jig 160 is attached to the fixed wall 14. FIG. 10 is a right side view illustrating the imaging jig 160. FIG. 11 us a plan view illustrating the imaging jig 160 and shows a positional relationship between the imaging jig 160 and the support surface 26. In this example embodiment, as illustrated in FIG. 8, the imaging jig 160 includes a support plate 161 and coupling portions 170. As illustrated in FIG. 9, the support plate 161 supports the imaging device 150. In this example embodiment, the imaging device 150 is placed on the support plate 161 so that the imaging device 150 is supported. As illustrated in FIG. 3, in a state where the imaging jig 160 is fixed to the fixed wall 14, the support plate 161 is oriented in parallel with the support surface 26 (i.e., the mounting jig 130). As illustrated in FIG. 8, the shape of the support plate 161 is rectangular or substantially rectangular However, the shape of the support plate 161 is not particularly limited.

In this example embodiment, the support plate 161 has an imaging hole 162. The imaging hole 162 is a hole with which the imaging device 150 captures an image of the support surface 26. The imaging device 150 captures an image of the support surface 26 through the imaging hole 162. As illustrated in FIG. 11, the imaging hole 162 is located at a position corresponding to the lens 151 of the imaging device 150. The lens 151 of the imaging device 150 is located at the imaging hole 162. In other words, the imaging device 150 is located such that the lens 151 overlaps the imaging hole 162 in a plan view in the state where the imaging device 150 is supported by the support plate 161. The shape of the imaging hole 162 is not particularly limited, and is rectangular in this example embodiment as illustrated in FIG. 8. As described above, in this example embodiment, the imaging device 150 is, for example, a smartphone having a camera function. In this case, the lens 151 is located at a position deviated from the center of the body of the smartphone, for example, at any of the four corners of the body of the smartphone. Therefore, the imaging hole 162 overlapping the lens 151 is located at a position deviated from the center of the support plate 161, for example, a left portion of the support plate 161.

In this example embodiment, as illustrated in FIG. 8, the imaging jig 160 includes a front plate 165, a rear plate 166, and side plates 167. The front plate 165 is connected to the front end of the support plate 161 and extends upward from the front end. The rear plate 166 is connected to the rear end of the support plate 161 and extends upward from the rear end. The rear plate 166 is fixed to the fixed wall 14 with an unillustrated bolt in a state where the support plate 161 is parallel to the support surface 26.

The side plates 167 are connected to both the left and right ends of the support plate 161 and extend upward. In this example embodiment, the side plates 167 include a first side plate 167A and a second side plate 167B. The first side plate 167A is connected to the left end of the support plate 161. The second side plate 167B is connected to the right end of the support plate 161. The first side plate 167A and the second side plate 167B extend upward from the support plate 161. In this example embodiment, the first side plate 167A and the second side plate 167B are longer in the height directions Z at a rear portion than at a front portion.

As illustrated in FIG. 9, the coupling portions 170 couple the support plate 161 and the fixed wall 14. In this example embodiment, the coupling portions 170 are located on the side plate 167. The coupling portions 170 project rearward from rear end portions 168 of the side plates 167. The rear end portions 168 refer to end portions of the side plates 167 including the rear ends extending upward and downward. The rear end portion 168 of the first side plate 167A is a rear end portion 168A. The rear end portion 168 of the second side plate 167B is a rear end portion 168B. The coupling portions 170 herein include a first coupling portion 170A located on the first side plate 167A and a second coupling portion 170B located on the second side plate 167B. The first coupling portion 170A projects rearward from the rear end portion 168A of the first side plate 167A. The second coupling portion 170B projects rearward from the rear end portion 168B of the second side plate 167B. In this example embodiment, the first coupling portion 170A and the second coupling portion 170B have similar configurations. Therefore, the configuration common to both the first coupling portion 170A and the second coupling portion 170B will be described using the terminology of the coupling portions 170.

In this example embodiment, the coupling portions 170 have hook shapes. Specifically, each of the coupling portions 170 includes a projecting portion 171 and a hook portion 172. The projecting portion 171 projects rearward from the rear end portion 168 of the side plate 167. The hook portion 172 is connected to the rear end of the projecting portion 171 and extends downward from the projecting portion 171. As illustrated in FIG. 10, a gap is defined between the hooked portion 172 and the side plate 167. In this example embodiment, a front end portion of the hook portion 172 is a contact end 173. The contact end 173 extends linearly in the height directions Z.

In this example embodiment, as illustrated in FIG. 9, the fixed wall 14 has coupling holes 15. The coupling holes 15 are elongated holes extending in the height directions Z. The coupling portions 170 of the imaging jig 160 are hooked on the coupling holes 15. The hook portions 172 of the coupling portions 170 are inserted into the coupling holes 15. In this example embodiment, the coupling holes 15 include a first coupling hole 15A and a second coupling hole 15B. The first coupling holes 15A and the second coupling holes 15B are arranged side by side in the main scanning directions Y. The hook portion 172 of the first coupling portion 170A is inserted into the first coupling hole 15A. The hook portion 172 of the second coupling portion 170B is inserted into the second coupling hole 15B. In this manner, the coupling portions 170 are hooked on the coupling holes 15, allowing the imaging jig 160 to be attached to the fixed wall 14.

In this example embodiment, as illustrated in FIG. 9, the imaging jig 160 includes contact projections 175. The contact projections 175 are brought into contact with the fixed wall 14 when the imaging jig 160 is attached to the fixed wall 14. The contact projections 175 project toward the fixed wall 14 relative to the support plate 161. In this example embodiment, the contact projections 175 are located on the side plates 167. The contact projections 175 are connected to the rear end portions 168 pf the side plates 167 and project rearward from the rear end portions 168 of the side plates 167. The contact projections 175 are located below the coupling portions 170 located on the side plates 167. The contact projections 175 herein are located on both the left and right sides of the support plate 161. The contact projections 175 include a first contact projection 175A located on the first side plates 167A and a second contact projection 175B located on the second side plates 167B. The first contact projection 175A projects rearward from the rear end portion 168A of the first side plate 167A. The second contact projection 175B projects rearward from the rear end portion 168B of the second side plate 167B.

In this example embodiment, as illustrated in FIG. 10, rear end portions of the contact projections 175 are projection contact ends 176. The projection contact ends 176 extend linearly in the height directions Z. In this example embodiment, in the state where the imaging jig 160 is attached to the fixed wall 14, the projection contact ends 176 of the contact projections 175 (specifically, both the first contact projection 175A and the second contact projection 175B) are in contact with the front surface of the fixed wall 14. At this time, the contact ends 173 of the hook portions 172 of the coupling portions 170 (specifically, both the first coupling portion 170A and the second coupling portion 170B) are in contact with the rear surface of the fixed wall 14. In this manner, the projection contact ends 176 of the contact projections 175 and the contact ends 173 of the hooked portions 172 come into contact with the fixed wall 14 to restrict rotation of the support plate 161 of the imaging jig 160. Accordingly, when the imaging jig 160 is attached to the fixed wall 14, the support plate 161 can be arranged in parallel with the support surface 26, as illustrated in FIG. 4.

In this example embodiment, the imaging jig 160 is located at a position higher than the support surface 26, that is, located above the support surface 26, in the internal space 13 of the case 11. The imaging jig 160 is configured not to interfere with the cover 12 in a state where the opening 18 of the case 11 is closed by the cover 12, and the imaging jig 160 is located rearward of the cover 12. The imaging jig 160 is located at a position that does not interfere with the carriage 30 while the carriage 30 is moving in the main scanning directions Y. The imaging jig 160 herein is located above the carriage 30. The front end of the support plate 161 of the imaging jig 160 is located forward of the carriage 30. The imaging jig 160 is located forward of the fixed wall 14. In this example embodiment, in a state where the support table 25 is located at the reference position P11, the imaging jig 160 is located above the support surface 26 and, as illustrated in FIG. 11, is located in a position that overlaps the support surface 26 in a plan view. Specifically, in the state where the support table 25 is located at the reference position P11, the imaging jig 160 is located such that the imaging hole 162 of the support plate 161 overlaps the center portion (specifically, the center C1) of the print area AR1 of the support surface 26 in a plan view.

In this example embodiment, as illustrated in FIG. 3, a position of the imaging device 150 at which the imaging device 150 captures an image of the support surface 26 will be referred to as an imaging position P13. The imaging position P13 refers to a position of the imaging device 150 (specifically, the lens 151 of the imaging device 150) relative to the support surface 26. In this example embodiment, as illustrated in FIG. 11, the position of the imaging device 150 when supported by the support plate 161 such that the lens 151 of the imaging device 150 overlaps the imaging hole 162 of the imaging jig 160 in a plan view is the imaging position P13. The imaging position P13 is a position above the support surface 26, and is a position at which the lens 151 overlaps the center C1 of the print area AR1 in a plan view.

In this example embodiment, in the processing system 1, the operation terminal 100 acquires a captured image obtained by the imaging device 150 at the imaging position P13, and based on the captured image, determines the position, size, orientation, and so forth, of the print object 5 with respect to the print area AR1, aligns the position of the print data (e.g., the print image) to be printed on the print object 5 with respect to the captured image, and creates output data for printing, which will be described in detail later. Then, the output data is transmitted to the printer 10, and printing is performed on the print object 5 based on the output data.

In this example embodiment, the print object 5 is a three-dimensional object. Therefore, in the state where the print object 5 is supported by the support surface 26, the printing surface 5a of the print object 5 is located at a position higher than the support surface 26. When the imaging device 150 captures an image of the support surface 26 at the imaging position P13, since the printing surface 5a of the print object 5 is closer to the imaging device 150 than the support surface 26, the printing surface 5a might appear large in the captured image. If output data is created in this state, print data adjusted to the size of the printing surface 5a in the captured image can be aligned with the captured image, allowing for creation of output data. Consequently, when the printer 10 performs printing on the print object 5 based on this output data, the printed image is larger in size relative to the printing surface 5a, and a desired printing result might not be obtained.

In view of this, this example embodiment provides an alignment method for obtaining a desired printing result. In this example embodiment, as illustrated in FIG. 5, the printer controller 60 of the printer 10 is configured or programmed to include a printer storage 61, a support table movement controller 63, a pointer movement controller 65, and an irradiation controller 67. The controller 103 of the operation terminal 100 is configured or programmed to include a storage 110, an image acquirer 112, a height acquirer 113, an extractor 114, a calculator 115, a corrector 117, a first creator 119, and a second creator 121. Each component of the printer controller 60 and each component of the controller 103 may be software and/or hardware. For example, each component of the printer controller 60 and each component of the controller 103 may be implemented by a plurality of processors, or may be incorporated in a circuit.

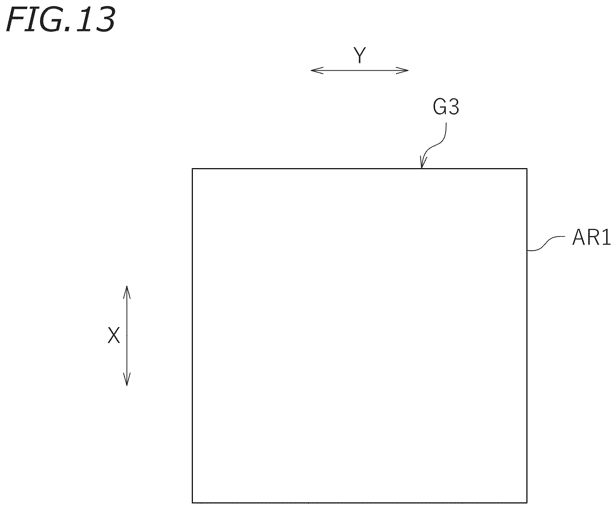

In this example embodiment, the storage 110 in FIG. 5 stores an actual range image G3 (see FIG. 13) beforehand. The actual range image G3 is data indicating an actual range that is an actual size of the print area AR1 of the support surface 26. The actual range image G3 is an example of actual range data indicating the actual range of the present invention, and refers to data indicating the actual range data as an image. The actual range image G3 only needs to indicate the actual size of the print area AR1, and may indicate the outer frame of the print area AR1, for example. The actual range image G3 may be filled with a predetermined color (e.g., black) within the outer frame.

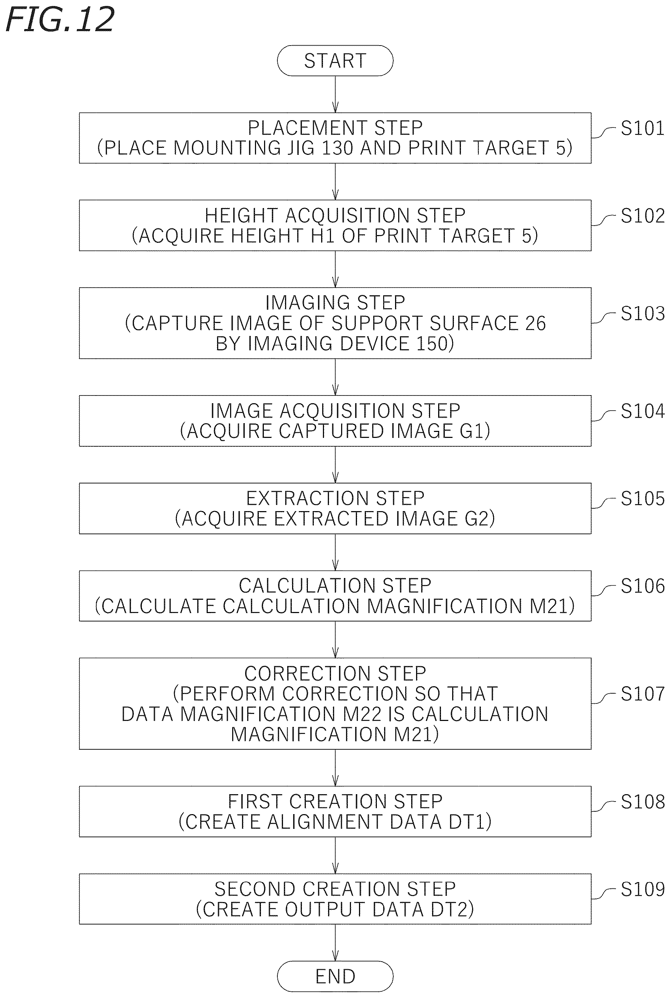

Next, a procedure from when the print object 5 is supported by the support surface 26 of the support table 25 to when printing on the print object 5 starts will be described with reference to the flowchart of FIG. 12. The flowchart of FIG. 12 includes an alignment method according to this example embodiment. In this example embodiment, in capturing an image of the support surface 26 with the print object 5 supported by the support surface 26, the user manipulates the operation panel 20 to set the mode of the printer 10 in an alignment mode. In the alignment mode, the flowchart of FIG. 12 is sequentially performed.

First, in a placement step S101 of FIG. 12, as illustrated in FIG. 7, the print object 5 is placed on the support surface 26 of the support table 25 of the printer 10 to be supported by the support surface 26. In this example embodiment, the user places the mounting jig 130 on the support surface 26 and places the print object 5 on the mounting jig 130. In this example embodiment, the placement step S101 is performed in a state where the support table 25 is located at the reference position P11. In performing the placement step S101, the support table movement controller 63 (see FIG. 5) of the printer 10 moves the support table 25 to the reference position P11. The support table movement controller 63 herein controls the support table moving mechanism 52 and the lifting mechanism 53 so that the support table 25 moves to the reference position P11. The reference position P11 is a position at which the support table 25 is lowered to a predetermined height. For example, a range in the height directions Z in which the lifting mechanism 53 is allowed to lift and lower the support table 25 will be referred to as a liftable range. In this example embodiment, the position in the height directions Z at the reference position P11 is a position included in the lowest range when the liftable range is divided into three equal parts, preferably a position included in the lowest range when the liftable range is divided into four equal parts, particularly preferably a position included in the lowest range when the liftable range is divided into five equal parts. For example, the position in the height directions Z at the reference position P11 is the lowest position of the support table 25 that can be moved downward by the lifting mechanism 53. For example, a range in the sub-scanning directions X in which the support table 25 can be moved in the sub-scanning directions X by the support table moving mechanism 52 will be referred to as a movable range. In this example embodiment, the position in the sub-scanning directions X at the reference position P11 is a position included in the foremost range when the movable range is divided into three equal parts, preferably a position included in the foremost range when the movable range is divided into four equal parts, particularly preferably a position included in the foremost range when the movable range is divided into five equal parts. For example, the position in the sub-scanning directions X at the reference position P11 may be the foremost position of the support table 25 that can be moved forward by the support table moving mechanism 52.

In this example embodiment, the placement step S101 is performed in a state where the laser pointer 38 is located at the irradiation position P12, as illustrated in FIG. 7. In performing the placement step S101, the pointer movement controller 65 (see FIG. 5) of the printer 10 moves the laser pointer 38 to the irradiation position P12. In this example embodiment, by moving the carriage 30 in the main scanning directions Y, the laser pointer 38 moves in the main scanning directions Y together with the carriage 30. The pointer movement controller 65 is configured or programmed to control the movement mechanism 51 so that the laser pointer 38 moves in the main scanning directions Y together with the carriage 30, and the laser pointer 38 moves to the irradiation position P12. At the irradiation position P12, the emitter 38a of the laser pointer 38 is located at a position overlapping the center C1 (see FIG. 6) of the print area AR1 in a plan view.

In the placement step S101, the mounting jig 130 is first placed on the support surface 26 with the support table 25 located at the reference position P11. As illustrated in FIG. 6, since the print area AR1 is set beforehand on the support surface 26, the mounting jig 130 is placed on the support surface 26 such that the plurality of specific marks M1 applied to the mounting jig 130 overlap the positions of the vertices of the print area AR1 in a plan view. At this time, the mounting jig 130 is oriented on the supporting surface 26 such that the first specific mark M11, the second specific mark M12, the third specific mark M13, and the fourth specific mark M14 are arranged at the left front, left rear, right rear, and right front, respectively, of the mounting jig 130. In other words, the mounting jig 130 is placed on the support surface 26 such that the positional relationship among the plurality of specific marks M1 is the reference positional relationship P1.

Thereafter, the user causes the support surface 26 to support the print object 5. In this example embodiment, the user places the print object 5 on the mounting jig 130 that is placed on the support surface 26. In this example embodiment, in a state where the support table 25 is located at the reference position P11 and the laser pointer 38 is located at the irradiation position P12, the irradiation controller 67 (see FIG. 5) of the printer 10 emits laser light from the laser pointer 38 toward the print area AR1 of the support surface 26. Specifically, the irradiation controller 67 controls the emission of laser light from the laser pointer 38 so that the laser light irradiates the center portion (specifically, the center C1) of the print area AR1. The user places the print object 5 on the support surface 26 based on the position irradiated with the laser light in the print area AR1. At this time, the print object 5 is preferably placed on the support surface 26 such that the print object 5 is located at the position irradiated with the laser light on the center portion of the print object 5.

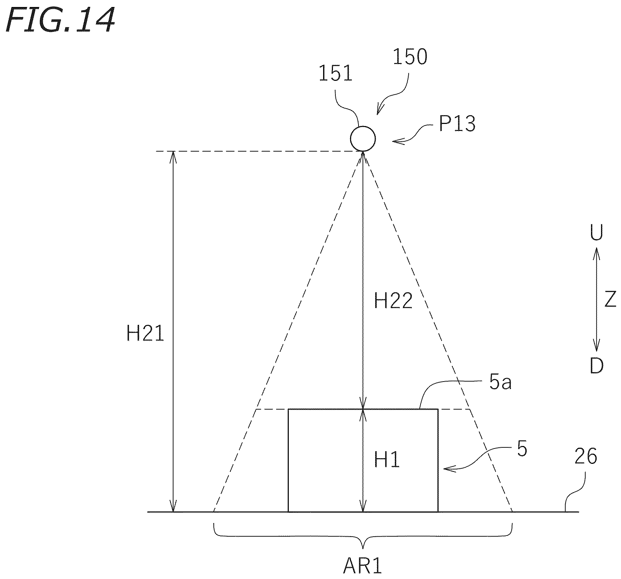

FIG. 14 schematically illustrates a positional relationship among the imaging position P13, the support surface 26, and the print object 5. Next, in a height acquisition step S102 in FIG. 12, a height H1 of the print object 5 supported by the support surface 26 (see FIG. 14) is acquired. In this example embodiment, the height acquisition step S102 is implemented by the height acquirer 113 (see FIG. 5) of the operation terminal 100. The height acquirer 113 acquires the height H1 of the print object 5 supported by the support surface 26. In this example embodiment, the height acquirer 113 acquires the height H1 of the print object 5 placed on the support surface 26 (specifically, placed on the mounting jig 130, and indirectly placed on the support surface 26 via the mounting jig 130) in the placement step S101. The height H1 of the print object 5 refers to a distance in the height directions Z from the support surface 26 to the printing surface 5a of the print object 5, for example. The specific method for acquiring the height H1 of the print object 5 is not particularly limited. For example, the user manipulates the operation panel 20 (e.g., the operation key 22) (see FIG. 5) to input the height H1 of the print object 5. The height acquirer 113 acquires the height H1 of the print object 5 input to the operation panel 20. Alternatively, information concerning the height H1 of the print object 5 may be stored in the storage 110 beforehand. In this case, the height acquirer 113 may acquire the height H1 of the print object 5 stored in the storage 110. The height H1 of the print object 5 may be automatically acquired by the printer 10. In this case, for example, the printer 10 includes a sensor (not shown) that detects the height H1 of the print object 5. The height acquirer 113 transmits a detection signal to the sensor via the controller 60 of the printer 10. The sensor that has received the detection signal detects the height H1 of the print object 5 and transmits information concerning the height H of the print object 5 to the operation terminal 100 via the controller 60. The height acquirer 113 acquires the height H1 of the print object 5 detected by the sensor.

Thereafter, in an imaging step S103 in FIG. 12, an image of the support surface 26 is captured using the imaging device 150. In this example embodiment, the user captures an image of the support surface 26 using the imaging device 150 such that the print area AR1, the plurality of specific marks M1 (specifically, the first specific mark M11 through the fourth specific mark M14), and the print object 5 supported by the support surface 26 are included in the image. In this example embodiment, the laser pointer 38 located at the irradiation position P12 is first retracted. The pointer movement controller 65 (see FIG. 5) of the printer 10 controls the movement mechanism 51 to move the laser pointer 38 located at the irradiation position P12 to a so-called home position (not shown). The home position herein refers to, for example, the position of the right end of the guide rail 28. The movement mechanism 51 moves the laser pointer 38 in the main scanning directions Y together with the carriage 30, to the home position.

In the imaging step S103, as illustrated in FIG. 9, the imaging jig 160 is attached to the fixed wall 14. The imaging jig 160 is attached to the fixed wall 14 in the internal space 13 by hooking the coupling portions 170 on the coupling holes 15 of the fixed wall 14. At this time, as illustrated in FIG. 10, the projection contact ends 176 of the contact projections 175 of the imaging jig 160 and the contact ends 173 of the hooked portions 172 of the coupling portions 170 are brought into contact with the fixed wall 14 to allow the support plate 161 to be arranged in parallel with the support surface 26, as illustrated in FIG. 4. In the state where the imaging jig 160 is attached to the fixed wall 14, the imaging device 150 is supported by the support plate 161 of the imaging jig 160. In this example embodiment, as illustrated in FIG. 11, the imaging device 150 is placed on the support plate 161 such that the lens 151 of the imaging device 150 overlaps the imaging hole 162 of the support plate 161 in a plan view.

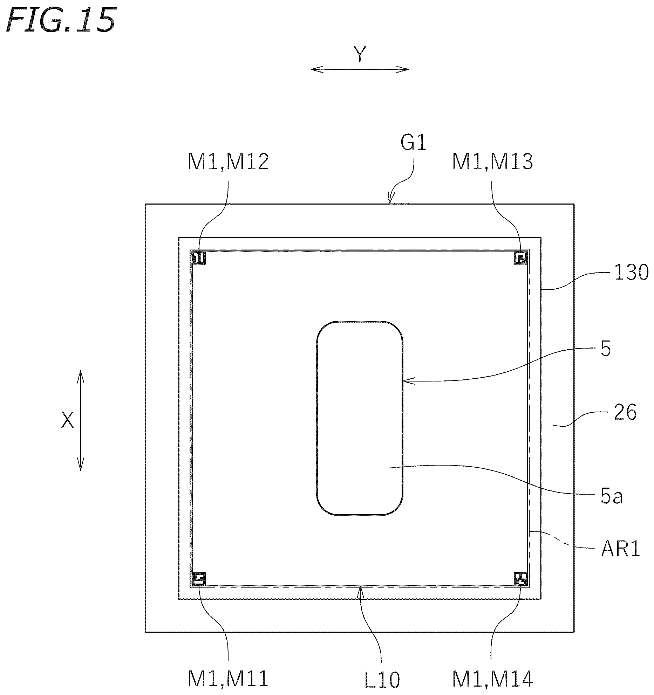

In this example embodiment, in a state where the support table 25 is located at the reference position P11 and the imaging device 150 is supported by the imaging jig 160 and located at the imaging position P13, an image of the support surface 26 is captured by the imaging device 150. At this time, the image of the support surface 26 is captured by the imaging device 150 such that the print area AR1, the plurality of specific marks M1, and the print object 5 supported by the support surface 26 are included in the image. In this example embodiment, the image of the support surface 26 captured by the imaging device 150 is the captured image G1 (see FIG. 15). The captured image G1 of the support surface 26 captured by the imaging device 150 is stored in the imaging device 150.

As illustrated in FIG. 15, the captured image G1 includes the print area AR1 and the printing surface 5a of the print object 5. In this example embodiment, the distance from the imaging position P13 to the support surface 26 is constant. Therefore, the size of the print area AR1 appearing in the captured image G1 captured by the imaging device 150 is constant. In other words, the interval between the plurality of specific marks M1 indicating the print area AR1 of the captured image G1 is constant. However, the size of the print object 5 appearing in the captured image G1 may differ in accordance with the height H1 of the print object 5. For example, in the case of a print object 5 that is long in the height directions Z, the distance from the printing surface 5a to the imaging device 150 is short, resulting in that the print object 5 appears to be large. The size of the print object 5 appearing in the captured image G1 in FIG. 15 is larger than the print object 5 supported by the support surface 26 as shown in FIG. 6.

Next, in an image acquisition step S104 in FIG. 12, the captured image G1 captured by the imaging device 150 is acquired. In this example embodiment, the image acquisition step S104 is implemented by the image acquirer 112 (see FIG. 5) of the operation terminal 100. The image acquirer 112 acquires the captured image G1 from the imaging device 150. In this example embodiment, as illustrated in FIG. 1, the operation terminal 100 and the imaging device 150 are communicably connected via the Internet 200. For example, when the imaging device 150 captures an image of the support surface 26, the captured image G1 is transmitted to the operation terminal 100 via the Internet 200. The captured image G1 may be automatically transmitted to the operation terminal 100 at the time when the image G1 is captured by the imaging device 150. Alternatively, when the imaging device 150 receives an acquisition signal transmitted from the operation terminal 100, the captured image G1 may be transmitted from the imaging device 150 to the operation terminal 100. In a case where the operation terminal 100 and the imaging device 150 are integrated, the captured image G1 is acquired by the image acquirer 112 without passing through the Internet 200. The image acquirer 112 acquires the captured image G1 transmitted from the imaging device 150. The captured image G1 acquired by the image acquirer 112 is stored in the storage 110 in FIG. 5.

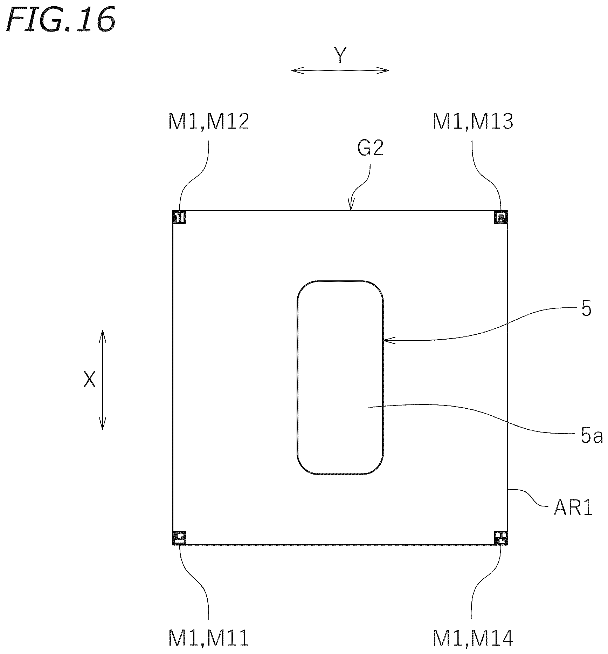

Subsequently, an extraction step S105 in FIG. 12 is performed. In the extraction step S105, an extracted image G2 (see FIG. 16) is extracted from the captured image G1. In this example embodiment, the extraction step S105 is implemented by the extractor 114 (see FIG. 5) of the operation terminal 100. The extractor 114 extracts the extracted image G2 including the print area AR1 from the captured image G1. In this example embodiment, the print area AR1 is rectangular, and the identification marks M1 are applied to the four corners of the print area AR1. In this example embodiment, the extractor 114 extracts the extracted image G2 that includes the print area AR1, the plurality of specific marks M1, and the print object 5 and that has a shape corresponding to the print area AR1 (in this case, rectangular). The extracted image G2 extracted by the extractor 114 is stored in the storage 110 in FIG. 5.

Thereafter, a calculation step S106 in FIG. 12 is performed. In the calculation step S106, a calculation magnification M21 is calculated. The calculation magnification M21 as used herein refers to a numerical value indicating a ratio of the distance in the height directions Z to the printing surface 5a of the print object 5 to the distance in the height directions Z to the support surface 26, with reference to the imaging position P13. In this example embodiment, the calculation step S106 is implemented by the calculator 115 (see FIG. 5) of the operation terminal 100. The calculator 115 calculates the calculation magnification M21 based on a support surface distance H21 (see FIG. 14) and a surface distance H22 (see FIG. 14).

As illustrated in FIG. 14, the support surface distance H21 is a distance in the height directions Z from the support surface 26 to the imaging position P13. In this example embodiment, information concerning the positions of the supporting surface 26 and the imaging position P13 in the case 11, for example, is stored in the storage 110 beforehand. Therefore, the calculator 115 can calculate the support surface distance H21 based on the information concerning the positions of the support surface 26 and the imaging position P13. The surface distance H22 is the distance in the height directions Z from the printing surface 5a of the print object 5 to the imaging position P13. In this example embodiment, the height H1 of the print object 5 is acquired in advance. Therefore, the calculator 115 calculates the surface distance H22 based on the support surface distance H21 and the height H1 of the print object 5. Specifically, the calculator 115 can calculate the surface distance H22 by subtracting the height H1 of the print object 5 from the support surface distance H21.

In this example embodiment, the calculator 115 calculates a proportion of the surface distance H22 to the support surface distance H21 as the calculation magnification M21. The calculation magnification M21 herein is calculated by dividing the support surface distance H21 by the surface distance H22 (i.e., by the formula of support surface distance H21/surface distance H22). The calculation magnification M21 calculated by the calculator 115 is stored in the storage 110 in FIG. 5.

Then, a correction step S107 in FIG. 12 is performed. In this example embodiment, the correction step S107 is implemented by the corrector 117 (see FIG. 5) of the operation terminal 100. In the correction step S107, based on the calculation magnification M21, the size of the actual range image G3 (see FIG. 13) or the extracted image G2 (see FIG. 16) is corrected. In the correction step S107, the actual range image G3 or the extracted image G2 is corrected so that the ratio of the size of the print object 5 of the extracted image G2 to the print area AR1 of the actual range image G3 becomes equal to the ratio when the support surface 26 and the printing surface 5a of the print object 5 are at the same height. In this example embodiment, the magnification of the extracted image G2 with respect to the actual range image G3 is referred to as a data magnification M22. In this example embodiment, the data magnification M22 of the extracted image G2 with respect to the actual range image G3 before correction is 1. In the correction step S107, the size of the actual range image G3 or the extracted image G2 is corrected so that the data magnification M22 is the calculation magnification M21. In this example embodiment, the actual range image G3 as an example of actual range data includes coordinate information concerning the coordinates of the vertices (in this case, vertices at the actual four corners of the rectangular print area AR1) in the print area AR1 (actual range). The corrector 117 corrects the size of the actual range image G3 or the extracted image G2 based on the coordinate information so that the data magnification M22 is the calculation magnification M21. To correct the data magnification M22 to the calculation magnification M21, it is not particularly limited which image, between the actual range image G3 and the extracted image G2, is to be corrected in size.

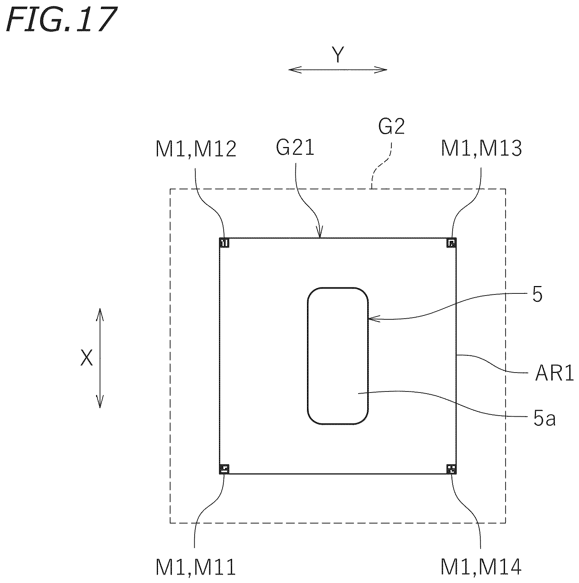

In this example embodiment, the corrector 117 corrects the extracted image G2 to reduce the size of the extracted image G2 without changing the size of the actual range image G3 so that the data magnification M22 is the calculation magnification M21. The corrector 117 reduces the size of the extracted image G2 by multiplying the size of the extracted image G2 by the calculation magnification M21. In this example embodiment, based on the coordinate information of the actual range image G3, the size of the extracted image G2 is reduced so that the coordinates of each vertex in the extracted image G2 multiplied by the calculation magnification M21 correspond to the coordinates of each vertex of the print area AR1 in the actual range image G3. For example, each vertex in the extracted image G2, that is, the four corners (i.e., the plurality of specific marks M1) of the print area AR1 has an x coordinate and a y coordinate set to indicate the position on the plane. By multiplying the x and y coordinates of each vertex of the extracted image G2 by the calculation magnification M21 (i.e., performing multiplication), the size of the extracted image G2 is reduced. By reducing the size of the extracted image G2, the size of the print object 5 included in the extracted image G2 is also reduced in the same manner. In this example embodiment, the extracted image G2 that has been reduced in size and corrected by multiplying by the calculation magnification M21 is referred to as a corrected extracted image G21 (see FIG. 17). The size of the corrected extracted image G21 is the size of the extracted image G2 multiplied by the calculation magnification M21. That is, the length of the corrected extracted image G21 in the main scanning directions Y is the value obtained by multiplying the length of the extracted image G2 in the main scanning directions Y by the calculation magnification M21. The length of the corrected extracted image G21 in the sub-scanning directions X is the value obtained by multiplying the length of the extracted image G2 in the sub-scanning directions X by the calculation magnification M21. In FIG. 17, the broken line indicates the size of the extracted image G2, and the extracted image G2 is reduced in size to the corrected extracted image G21. Accordingly, the magnification of the corrected extracted image G21 with respect to the actual range image G3 is the calculation magnification M21.

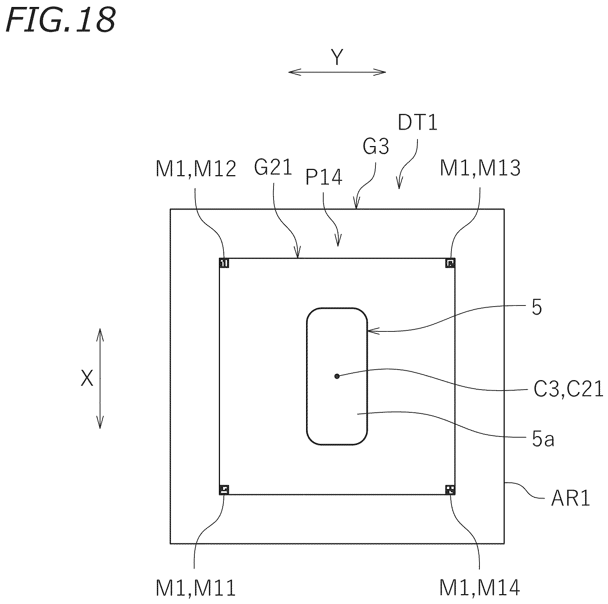

Then, a first creation step S108 in FIG. 12 is performed. In the first creation step S108, alignment data DT1 (see FIG. 18) is created. In this example embodiment, the first creation step S108 is implemented by the first creator 119 (see FIG. 5) of the operation terminal 100. The first creator 119 creates the alignment data DT1 by aligning the actual range image G3 and the extracted image G2 (the corrected extracted image G21 in this example embodiment) after correction in the correction step S107 so that the data magnification M22 is the calculation magnification M21. In this preferred example embodiment, as illustrated in FIG. 18, the alignment data DT1 is image data after alignment of the actual range image G3 and the corrected extracted image G21 so that the corrected extracted image G21 (corrected extracted image G21 in this example embodiment) is located at a predetermined position P14 in the print area AR1 of the actual range image G3. In the alignment data DT1, the corrected extracted image G21 is located in the actual range image G3.

In this example embodiment, in the placement step S101 in FIG. 12, as illustrated in FIG. 6, the print object 5 is placed on the support surface 26 such that the print object 5 overlaps the center C1 of the print area AR1 on the support surface 26. Therefore, in the first creation step S108, as illustrated in FIG. 18, the first creator 119 performs alignment by overlapping the actual range image G3 and the corrected extracted image G21 so that a center C3 of the actual range image G3 and a center C21 of the corrected extracted image G21 coincide with each other to create the alignment data DT1. The alignment data DT1 created by the first creator 119 is stored in the storage 110 in FIG. 5.

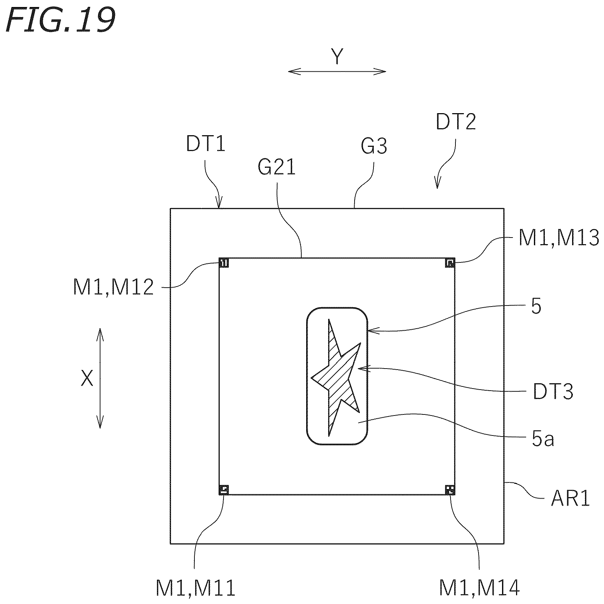

Thereafter, a second creation step S109 in FIG. 12 is performed. In the second creation step S109, output data DT2 (see FIG. 19) to be output to the printer 10 is created. In this example embodiment, the second creation step S109 is implemented by the second creator 121 (see FIG. 5) of the operation terminal 100. As illustrated in FIG. 19, the second creator 121 aligns print data DT3 and the alignment data DT1 to create the output data DT2. The print data DT3 is an example of processing data for processing the print object 5. In this example embodiment, the print data DT3 is data of a print image to be printed on the print object 5 (specifically, on the printing surface 5a). For example, the print data DT3 is stored in the storage 110 in FIG. 5 beforehand.

In this example embodiment, as illustrated in FIG. 19, the second creator 121 aligns the alignment data DT1 and the print data DT3 so that the print object 5 in the alignment data DT1 overlaps the print data DT3 to create the output data DT2. At this time, the orientation and size of the print data DT3 are preferably adjusted to match those of the print object 5 in the alignment data DT1. The orientation of the print object 5 and others in the alignment data DT1 are specified by the plurality of specific marks M1. As described above, the specific marks M1 may include, for example, AR markers. The controller 103 of operation terminal 100 is installed beforehand with an AR marker application capable of reading AR markers. The second creator 121 identifies the positions of the specific marks M1 by reading the specific marks M1 using the AR marker application. The second creator 121 specifies the orientation of the print object 5 and others from the identified specific marks M1.

Thereafter, as illustrated in FIG. 19, the second creator 121 creates the output data DT2 by overlaying the adjusted print data DT3 onto the print object 5 in the alignment data DT1. The output data DT2 herein refers to data that has been converted into a format that can be read by the printer controller 60 of the printer 10. The output data DT2 is, for example, data in a raster format (i.e., raster data). In this example embodiment, the data obtained by overlaying the print data DT3 on the alignment data DT1 is, for example, bitmap data. The second creator 121 creates the output data DT2 by rasterizing the data obtained by overlaying the print data DT3 on the alignment data DT1. The output data DT2 created by the second creator 121 is stored in the storage 110 in FIG. 5.

In this example embodiment, after the output data DT2 to the printer 10 has been created, printing on the print object 5 by the printer 10 starts. First, the output data DT2 is transmitted from the controller 103 of the operation terminal 100 to the printer 10. In the printer 10, the printer controller 60 receives the output data DT2, and based on the output data DT2, printing is performed on the print object 5 supported by the support surface 26. At this time, the position of the print object 5 with respect to the support surface 26 is the position at which the print object 5 is placed in the placement step S101 described above (see FIG. 7).

In printing on the print object 5, while the ink heads 32 are reciprocated once in the main scanning directions Y over, for example, the support table 25, ink is discharged from the ink heads 32 toward the print object 5 supported by the support surface 26 based on the output data DT2 to complete printing for one reciprocation. After one reciprocation of the ink heads 32, the support table 25 is moved in the sub-scanning directions X by a predetermined distance. At this time, the print object 5 supported by the support table 25 also moves by a predetermined distance in the sub-scanning directions X. Thereafter, while the ink heads 32 are reciprocated once in the main scanning directions Y over the support table 25, ink is discharged from the ink heads 32 and printing for next reciprocation is performed. In this example embodiment, by repeatedly performing one reciprocation of the ink heads 32 in the main scanning directions Y and movement of the support table 25 in the sub-scanning directions X, printing of the printed image on the print object 5 is completed based on the output data DT2.

In this example embodiment, the processing system 1 includes the printer 10 that has the support surface 26 on which the print object 5 as an example of a processing object is supported and which has the print area AR1 as an example of a processing range where the print object 5 is processed, and the controller 103 of the operation terminal 100 as an example of a controller. As illustrated in FIG. 5, the controller 103 includes the storage 110, the height acquirer 113, the image acquirer 112, the extractor 114, the calculator 115, the corrector 117, the first creator 119, and the second creator 121. In this example embodiment, as illustrated in FIG. 12, the alignment method includes the height acquisition step S102, the image acquisition step S104, the extraction step S105, the calculation step S106, the correction step S107, the first creation step S108, and the second creation step S109. The storage 110 stores the actual range image G3 (see FIG. 13) as an example of actual range data that includes an actual range indicating the actual size of the print area AR1. The height acquirer 113 acquires the height H1 of the print object 5 supported by the support surface 26 in the height acquisition step S102 (see FIG. 14). The image acquirer 112 acquires the captured image G1 (see FIG. 15) in the image acquisition step S104. The captured image G1 is an image of the support surface 26 captured by the imaging device 150 at the imaging position P13 such that the print area AR1 and the print object 5 supported by the support surface 26 are included in the image. As illustrated in FIG. 3, the imaging position P13 is a position that is located above the support surface 26 and is set beforehand with respect to the support surface 26. The extractor 114 extracts the extracted image G2 (see FIG. 16) including the print area AR1 from the captured image G1 in the extraction step S105. In the calculation step S106, the calculator 115 calculates the calculation magnification M21 of the surface distance H22 with respect to the support surface distance H21 based on the support surface distance H21 and the surface distance H22, where the support surface distance H21 is the distance in the height directions Z from the support surface 26 to the imaging position P13 and the surface distance H22 is the distance in the height directions Z from the surface (the printing surface 5a in this example embodiment) of the print object 5 based on the height H1 of the print object 5 to the imaging position P13, as illustrated in FIG. 14. In the correction step S107, the corrector 117 corrects the size of the actual range image G3 or the extracted image G2 so that the data magnification M22 of the extracted image G2 with respect to the actual area (the actual range image G3 in this example embodiment) of the print area AR1 is the calculation magnification M21. In the first creation step S108, the first creator 119 creates the alignment data DT1 (see FIG. 18) by aligning the actual range image G3 and the extracted image G2 (the corrected extracted image G21 in this example embodiment (see FIG. 17)) after correction so that the data magnification M22 is the calculation magnification M21. In the second creation step S109, the second creator 121 creates the output data DT2 to the printer 10 by aligning the print data DT3 for processing the print object 5 and the alignment data DT1, as illustrated in FIG. 19.

In this example embodiment, even in a case where the print object 5 is a three-dimensional object and the printing surface 5a of the print object 5 is located at a position higher than the support surface 26, the size of the actual range image G3 or the extracted image G2 is corrected so that the data magnification M22 of the extracted image G2 with respect to the actual range image G3 is the calculation magnification M21, allowing for correction based on the ratio of the surface distance H22 to the support surface distance H21. Accordingly, by creating the alignment data DT1 and the output data DT2 based on the size relationship between the corrected actual range image G3 and the corrected extracted image G21, it is possible to accurately perform alignment of the print object 5 with respect to the actual print area AR1. Therefore, the printer 10 performs printing on the print object 5 based on the thus-created output data DT2 so that desired processing can be achieved on the print object 5.

In this example embodiment, as illustrated in FIG. 13, the actual range image G3 as an example of actual range data is an image indicating an actual range of the print area AR1. The corrector 117 reduces the size of the extracted image G2 to correct the extracted image G2 such that the data magnification M22 is the calculation magnification M21. The first creator 119 creates the alignment data DT1 by aligning the actual range image G3 and the corrected extracted image G21 (see FIG. 17) corrected by the corrector 117. In this manner, by reducing the size of the extracted image G2 to create the corrected extracted image G21, the data magnification M22 can be easily made equal to the calculation magnification M21.

In this example embodiment, the first creator 119 creates the alignment data DT1 so that the extracted image G2 (the corrected extracted image G21 in this example embodiment) is located within the actual range image G3 and located at a predetermined position P14 (see FIG. 18) with respect to the actual range image G3. In this manner, in this example embodiment, since the corrected extracted image G21 and the actual range image G3 are image data, alignment data DT1 can be automatically created simply by overlaying the corrected extracted image G21 and the actual range image G3.

In this example embodiment, the print area AR1 is rectangular or substantially rectangular The actual range image G3 as an example of actual range data includes coordinate information concerning coordinates of the vertices in the actual range of the print area AR1 (i.e., the actual range of the print area AR1). The corrector 117 corrects the size of the actual range image G3 or the extracted image G2 based on the coordinate information so that the data magnification M22 is the calculation magnification M21. In this example embodiment, the size of the actual range image G3 or the extracted image G2 can be corrected by correcting the coordinates of each vertex of the print area AR1 in the actual range image G3 or the coordinates of each vertex in the extracted image G2 so that the data magnification M22 is the calculation magnification M21.

In this example embodiment, as illustrated in FIG. 11, the imaging position P13 is a position at which the imaging device 150 (specifically, the lens 151) overlaps the print area AR1 of the support surface 26 in a plan view. Accordingly, the captured image G1 is less likely to be distorted by capturing an image of the support surface 26 from immediately above the print area AR1.

In this example embodiment, an example of the processing device is the printer 10. As illustrated in FIG. 3, the printer 10 includes the ink heads 32 that discharge ink, and performs processing by discharging ink onto the print object 5 and perform printing on the print object 5. In this manner, even in a case where printing is performed on the print object 5 by the printer 10, desired printing can be performed on the print object 5 by allowing the printer to perform printing the printing target 5 based on the output data DT2 created by performing the alignment method described above.

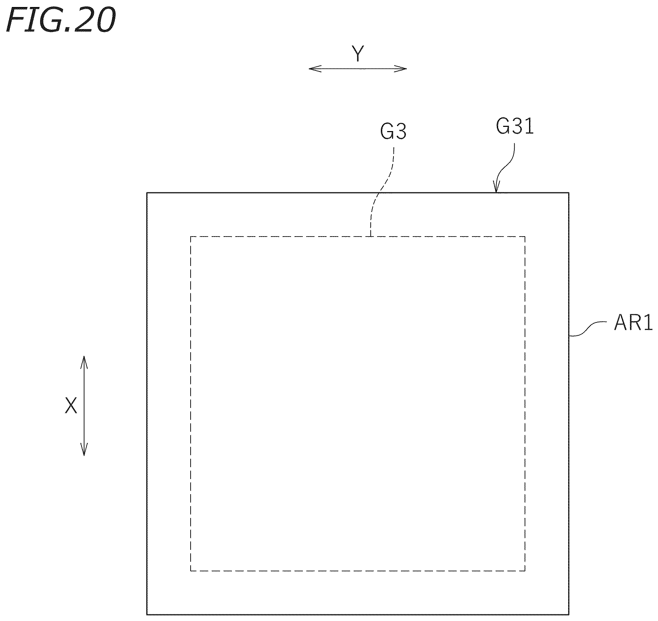

In the example embodiment described above, in the correction step S107 in FIG. 12, the size of the actual range image G3 or the extracted image G2 is corrected so that the data magnification M22 is the calculation magnification M21. At this time, in the example embodiment, the extracted image G2 is corrected to be reduced in size so that the data magnification M22 is the calculation magnification M21. Alternatively, in the correction step S107, the corrector 117 may correct the actual range image G3 to increase the size of the actual range image G3 so that the data magnification M22 is the calculation magnification M21. For example, the corrector 117 may increase the size of the actual range image G3 by multiplying the size of the actual range image G3 by the inverse number of the calculation magnification M21. The inverse number of the calculation magnification M21 herein is a value calculated by dividing the surface distance H22 by the support surface distance H21 (i.e., by the formula of surface distance H22/support surface distance H21). For example, based on the coordinate information of the actual range image G3, the size of the actual range image G3 may be increased so that the coordinates of each vertex in the extracted image G2 multiplied by the calculation magnification M21 correspond to the coordinates of each vertex of the print area AR1 in the actual range image G3. In this example embodiment, the actual range image G3 corrected to be increased in size by multiplying by the inverse number of the calculation magnification M21 is referred to as a corrected actual range image G31 (see FIG. 20). In FIG. 20, the broken line indicates the size of the actual range image G3, and the actual range image G3 is increased in size to the corrected actual range image G31. In this case, the size of the extracted image G2 is also the size of the corrected actual range image G31 multiplied by the calculation magnification M21. Accordingly, the magnification of the extracted image G2 with respect to the corrected actual range image G3 (the corrected actual range image G31 in this example embodiment) is the calculation magnification M21.

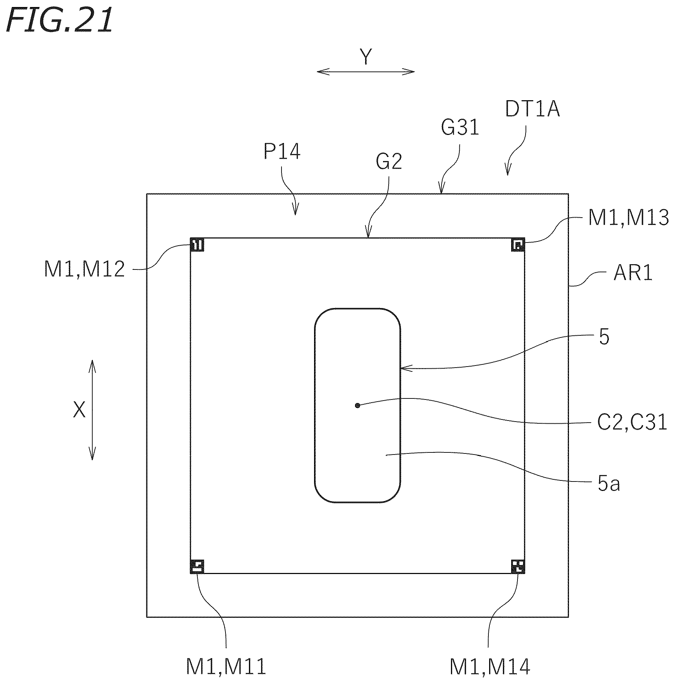

In this case, in the first creation step S108 in FIG. 12, alignment data DT1A (see FIG. 21) is created by aligning the corrected actual range image G3 (the corrected actual range image G31 in this case) and the extracted image G2. As illustrated in FIG. 21, for example, alignment is performed by overlaying the corrected actual range image G31 and the extracted image G2 so that the center C31 of the corrected actual range image G31 coincides with the center C2 of the extracted image G2 to create creating the alignment data DT1A.

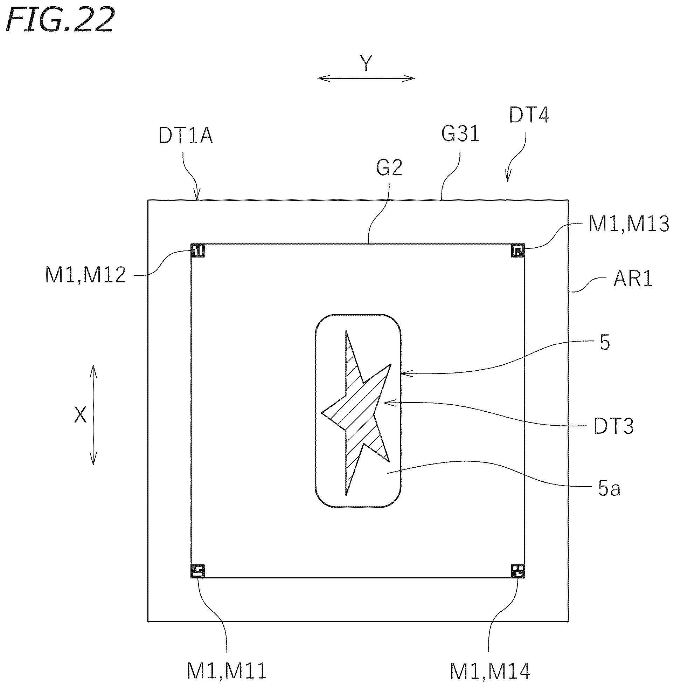

In this case, in the second creation step S109 in FIG. 12, the print data DT3 and the alignment data DT1A are aligned to create the output data. In this example embodiment, the orientation and size of the print data DT3 are preferably adjusted to match those of the print object 5 in the alignment data DT1A. In this example embodiment, in the second creation step S109 in FIG. 12, first, the overlay data DT4 (see FIG. 22) is created by overlaying the adjusted print data DT3 onto the print object 5 in the alignment data DT1A. The size of this overlay data DT4 is larger than that of the actual range image G3 (see FIG. 20) before correction. Therefore, in the second creation step S109, the entire overlay data DT4 is reduced in size so that the size of the overlay data DT4 is the same as that of the actual range image G3. Then, by rasterizing the overlaid data DT4 after reduction, the output data is created.

In this manner, even the case where the actual range image G3 is increased in size and corrected to create the corrected actual range image G31, the data magnification M22 can be easily made equal to the calculation magnification M21.

In the example embodiment, at least one of a portion of the height acquisition step S102, the image acquisition step S104, the extraction step S105, the calculation step S106, the correction step S107, the first creation step S108, and the second creation step S109 of the alignment method may be manually performed by the user as appropriate. In this case, for example, the operation terminal 100 is pre-installed with software to execute the alignment method. The user may manipulate the manipulator 102 to operate the installed software, allowing at least a portion of the height acquisition step S102, the image acquisition step S104, the extraction step S105, the calculation step S106, the correction step S107, the first creation step S108, and the second creation step S109 in FIG. 12 to be executed manually by the user.

In the present example embodiment, the imaging device 150 is not fixed to the printer 10. Alternatively, the imaging device 150 may be fixed to the printer 10 (e.g., the case 11 or the carriage 30). In this case, the imaging device 150 is preferably fixed to the printer 10 so that the imaging device 150 can be located at the imaging position P13. In this case, the imaging jig 160 may be omitted.

In the present example embodiment, the printer 10 is an example of a processing device according to the present invention. Alternatively, the processing device is not limited to the printer 10. The processing device may be a so-called cutting device. The cutting device may include a cutting head with a cutter, for example, to process a processing object by cutting the processing object with the cutter pressed against the processing object.

The processing device may also be a so-called hot stamping device. The hot stamping device includes a hot stamping head that presses foil against the processing object. In the hot stamping device, the processing object may be processed by pressing foil against the processing object with the hot stamping head to attach the foil to the processing object. The processing device may also be a so-called engraving machine or an inscription machine. The engraving machine may process the processing object by engraving the surface of the processing object using a rotating tool or a laser. The inscription machine may process the processing object by pressing the plate against the processing object under a pressure.

In the present example embodiment, the processing system 1 includes the printer 10 as an example of a processing device, and the operation terminal 100. Each component of the controller 103 of the operation terminal 100 may be included in the processing device. That is, each component of the controller 103 may be incorporated in the printer controller 60 of the printer 10.

## Claims

1. A processing system comprising:
a processing device including a support surface that supports a processing object and includes a processing area where the processing object is processed; and
a controller configured or programmed to:
a storage to store actual range data that includes an actual range indicating an actual size of the processing area;
a height acquirer configured or programmed to acquire a height of the processing object supported by the support surface;
an image acquirer configured or programmed to acquire a captured image obtained by capturing an image of the support surface by an imaging device such that the processing area and the processing object supported by the support surface are included in the image, the image being captured at an imaging position located above the support surface and set beforehand with respect to the support surface;
an extractor configured or programmed to extract an extracted image including the processing area from the captured image;
a calculator configured or programmed to calculate a calculation magnification of a surface distance with respect to a support surface distance based on the support surface distance and the surface distance, the support surface distance being a distance in top-bottom directions from the support surface to the imaging position, the surface distance being a distance in the top-bottom directions from a surface of the processing object to the imaging position;
a corrector configured or programmed to correct a size of the actual range or the extracted image such that a data magnification of the extracted image with respect to the actual range of the processing area is the calculation magnification;
a first creator configured or programmed to create alignment data by aligning the actual range and the extracted image corrected such that the data magnification is the calculation magnification; and
a second creator configured or programmed to create output data to be output to the processing device by aligning processing data to process the processing object and the alignment data.

2. The processing system according to claim 1, wherein
the actual range data is an actual range image indicating the actual range of the processing area;
the corrector is configured or programmed to reduce the size of the extracted image to correct the extracted image such that the data magnification is the calculation magnification; and
the first creator is configured or programmed to create the alignment data by aligning the actual range image and the extracted image corrected by the corrector.

3. The processing system according to claim 1, wherein
the actual range data is an actual range image indicating the actual range of the processing area;
the corrector is configured or programmed to increase a size of the actual range image to correct the actual range image such that the data magnification is the calculation magnification; and
the first creator is configured or programmed to create the alignment data by aligning the actual range image corrected by the corrector and the extracted image.

4. The processing system according to claim 2 or 3, wherein the first creator is configured or programmed to create the alignment data such that the extracted image is located within the actual range image and located at a predetermined position with respect to the actual range image.

5. The processing system according to any one of claims 1 to 4, wherein
the processing area is rectangular or substantially rectangular;
the actual range data includes coordinate information concerning coordinates of vertices in the actual range of the processing area; and
the corrector is configured or programmed to correct a size of the actual range or the extracted image based on the coordinate information such that the data magnification is the calculation magnification.

6. The processing system according to any one of claims 1 to 5, wherein the imaging position is a position at which the imaging device overlaps the processing area of the support surface in a plan view.

7. The processing system according to any one of claims 1 to 6, wherein
the processing device includes an ink head to discharge ink; and
the processing device is a printer to perform processing by discharging ink onto the processing object and printing the processing object.

8. An alignment method to be performed in a processing device including a support surface that supports a processing object and includes a processing area where the processing object is processed, the method comprising:
acquiring a height of the processing object supported by the support surface;
acquiring a captured image obtained by capturing an image of the support surface by an imaging device such that the processing area and the processing object supported by the support surface are included in the image, the image being captured at an imaging position located above the support surface and set beforehand with respect to the support surface;
extracting an extracted image including the processing area from the captured image;
calculating a calculation magnification of a surface distance with respect to a support surface distance based on the support surface distance and the surface distance, the support surface distance being a distance in top-bottom directions from the support surface to the imaging position, the surface distance being a distance in the top-bottom directions from a surface of the processing object to the imaging position;
correcting a size of the actual range or the extracted image such that a data magnification of the extracted image with respect to an actual range indicating an actual size of the processing area is the calculation magnification;
creating alignment data by aligning the actual range and the extracted image corrected such that the data magnification is the calculation magnification; and
creating output data to be output to the processing device by aligning processing data to process the processing object and the alignment data.
